# EUROPEAN PATENT SPECIFICATION

(11) **EP 4 364 282 B1**
(45) Date of publication and mention of the grant of the patent: **11.11.2026**
(21) Application number: 22741466.1
(22) Date of filing: 28.06.2022
(51) Int. Cl.: H02M 1/00, H02M 3/158, H02M 3/335, B60L 8/00, B60L 50/11, B60L 50/60, H02J 7/35

(54) **SCALABLE MULTI-PORT CONVERTER FOR SOLAR ELECTRIC VEHICLES**
SKALIERBARER MULTIPORT-WANDLER FÜR SOLARELEKTROFAHRZEUGE
CONVERTISSEUR MULTIPORT ÉVOLUTIF POUR VÉHICULES ÉLECTRIQUES SOLAIRES

(30) Priority: 29.06.2021 NL 2028567
(43) Date of publication of application: 08.05.2024
(73) Proprietor: Lightyear IPCo B.V., 5807 GW Oostrum (NL)
(72) Inventor: OTTEN, Marald, 5612 LC Eindhoven (NL); VERMULST, Bastiaan Joannes Daniël, 5737 EJ Lieshout (NL); BOKMANS, Bart Franciscus Joseph, 5658 HZ Eindhoven (NL)
(74) Representative: EP&C
(86) International application number: PCT/EP2022/067665
(87) International publication number: WO 2023/275011

(56) References cited:
- WO-A1-2019/199964
- US-A1- 2016 016 479
- US-A1- 2020 266 717
- US-A1- 2020 398 686

## Description

This invention pertains to a three-port isolated active bridge DC-DC power converter for converting power between an first primary-side port, a second primary-side port, and a secondary-side port. This invention further pertains to a three-port isolated active bridge DC-DC power converter system, comprising a plurality of three-port isolated active bridge DC-DC power converters. This invention further pertains to a multi-port isolated active bridge DC-DC power converter for converting power between a plurality of first primary-side ports, a second primary-side port, and a secondary-side port. This invention further pertains to a multi-port isolated active bridge DC-DC power converter system comprising a plurality of multi-port isolated active bridge DC-DC power converters. This invention further pertains to a solar power assembly, comprising a plurality of solar power generating units and a power converter system. This invention further pertains to a vehicle, comprising a solar power assembly.

### BACKGROUND

Vehicles, in particular vehicles that are at least in part, optionally fully, powered by renewable energy, in particular vehicles that are powered by power generating units such as solar panels or fuel cells, typically require power converters for converting power between power generators, power consumers, and power storage. For example, a typical architecture for a solar-powered vehicle includes a low voltage bus and a high voltage bus. The low voltage bus powers the low voltage electrical components of the vehicle and typically includes a low voltage battery for storing power. The high voltage bus powers the high voltage electrical components and typically includes a high voltage battery for storing power, and typically has a higher capacity than the low voltage battery. In this example architecture, it is typically required for the power generated by the power generating units to be converted to the low voltage bus and the high voltage bus. Further, the power stored in the high voltage battery is converted in certain cases to the low voltage bus.

In the state of the art, often multiple power converters are used. For example, the power generating units are solar power generating units. In this example, the energy of the solar power generating units is supplied to either the low voltage battery or the high voltage battery with a maximum power point tracker. A separate isolated power converter is used to convert energy between the low voltage battery and the high voltage battery. Due to the curvature of the roof and shade casted on the solar power generating units, the solar power generating units in certain cases receive a different solar irradiance. The different solar irradiance received by the solar power generating units results in a different output current for each solar power generating unit. If the solar power generating units are connected in series to generate a suitable output voltage, the solar power generating unit with the lowest irradiance limits the maximum power point current. In certain solutions found in the state of the art, the limiting solar power generating unit is bypassed, resulting in all power of that solar power generating unit being lost. Other solutions include reducing the number of solar power generating units and using a high voltage gain maximum power point tracker or using a delta maximum power point tracker which redistributes power among the solar power generating units. However, such solutions are often proposed for systems in which the solar power generating units receive about the same solar irradiance. Other solutions are proposed in the state of the art wherein the solar power generating units have high voltage output, which poses a safety concern. In particular, in case the vehicle in which the solution is integrated is involved in a crash, the solar power generating units cannot be turned off, which means that any rescue personnel and/or the driver is potentially exposed to these high voltages.

Further, from the state of the art, multi-port power converters are known. In some of these solutions, multi-port power converters are described in which fully isolated power conversion is provided between multiple power sources and sinks. However, isolation between the solar power generating units is typically not required, which reduces the efficiency of these power converters. In other solutions, multiple power inputs are combined, wherein a single switch is provided per input. As a result, only one input, i.e., one solar power generating unit, can be active at the same time. In yet other solutions, multi-port power converters are presented with two non-isolated and one isolated power port. However, several issues remain in these architectures. First, the isolated port(s) of these architectures is/are unidirectional, preventing power to flow both in and out of the isolated ports. In these architectures, an additional power converter is added to enable power flow in both directions. Second, every additional input, i.e., every additional solar power generating unit, requires an additional set of switching elements in the power converter. Third, excessive losses are incurred due to the high voltage gain for converting power to the high voltage bus.

Document WO 2019/199964 A1 describes a vehicle on-board charger for bi-directional charging of low/high voltage batteries. An on-board charger system comprises an on-board charger (OBC) and an integrated transformer sub-system. The OBC also includes a bi-directional power factor correction (PFC) rectifier through which the on-board charger system is connected to the power grid. The topology of the OBC system is able to achieve grid-to-vehicle, vehicle-to-grid and HV-to-LV operation . A back-to-back switches (or relay) are needed at the tertiary side of the DC/DC converter to cut the power flow during the grid-to-vehicle (G2V) charging or vehicle-to-grid (V2G) discharging operations. In resonant-based topologies, charger sub-systems have either half bridge or full bridge configuration.

Document US 2020/398686 A1 describes a combined converter circuit for an electric vehicle which includes a bi-directional converter circuit configured to convert voltage from a high voltage power bus connected to a main battery of the electric vehicle to a reduced or stepped down voltage corresponding to an auxiliary battery or auxiliary power bus. An Auxiliary Power Module (APM) comprises a hight voltage (HV) side and a low voltage (LV) side. Two HV power switches are provided to operate the circuit with the required duty ratio. A 14V supply is provided on the LV side. Two capacitors are employed to split the voltages on the HV side. Two capacitors are also provided on the secondary side to split the transformed voltage.

Document US 2020/266717 A1 describes a converter provided with: a transformer having a primary winding, a secondary winding, and a tertiary winding; a primary converter, connected to the primary winding, that includes a plurality of first switching elements; a secondary converter, connected to a load and the secondary winding, that includes a plurality of second switching elements; a tertiary converter, connected to the tertiary winding, that includes a plurality of third switching elements and a capacitor; and a control unit that performs a switching control with respect to the plurality of first switching elements, the plurality of second switching elements, and the plurality of third switching elements such that power is supplied from the primary converter to the secondary converter while keeping a voltage supplied to the load constant, and also such that power is supplied from the primary converter to the tertiary converter while keeping a current supplied to the capacitor constant.

Document US 2016/016479 A1 describes an integrated and isolated onboard charger for plug-in electric vehicles that includes an ac-dc converter and a dual-output dc-dc resonant converter, for both HV traction batteries and LV loads. In addition, the integrated and isolated onboard charger may be configured as unidirectional or bidirectional, and is capable of delivering power from HV fraction batteries to the grid for vehicle-to-grid (V2G) applications. The integrated charger is configured for various operation modes, including grid to vehicle (G2V), vehicle to grid (V2G) and high voltage to low voltage, HV-to-LV (H2L) charging.

### SUMMARY OF THE INVENTION

It is an objective of the invention to provide DC-DC power converters that improve upon the state of the art or to provide an alternative for the state of the art. It is further an objective of the invention to provide DC-DC power converter systems, wherein a DC-DC power converter system is a combination of multiple DC-DC power converters. The DC-DC power converter system provides for multiple first primary-side ports. It is further an objective of the invention to provide a solar power assembly, wherein a plurality of solar power generating units is connected to a power converter system. It is further an objective of the invention to provide a vehicle, wherein the vehicle comprises a solar power assembly for providing power to a low voltage battery and a high voltage battery.

According to a first aspect of the invention, the objective is achieved by a three-port isolated active bridge DC-DC power converter, comprising a control unit, a primary side, a secondary side, and a blocking switch.

The primary side comprises an first primary-side port, a second primary-side port, two primary-side switching elements, a primary-side converter inductance, and a primary-side transformer winding. The first primary-side port and the second primary-side port are distinct ports, i.e., there are at least two primary-side ports. In a preferential embodiment, the primary side comprises a single first primary-side port and a single second primary-side port, i.e., in this embodiment, the primary side comprises exactly two primary-side ports. The two primary-side switching elements and the primary-side converter inductance are arranged to form a half-bridge arrangement for bidirectionally converting power between the first primary-side port and the second primary-side port. The control unit is configured to control the two primary-side switching elements to convert power between the first primary-side port and the second primary-side port. The primary-side switching elements are, for example, JFETs, IGBTs, GaN HEMTs, or MOSFETs.

The primary-side circuit is arranged such that it forms a power converter between the first primary-side port and the second primary-side port. For example, in the case that the voltage is to be stepped down between the first primary-side port and the second primary-side port, the primary side forms a buck converter between the first primary-side port and the second primary-side port. For another example, in the case that the voltage is to be stepped up between the first primary-side port and the second primary-side port, the primary side forms a boost converter between the first primary-side port and the second primary-side port. To increase the efficiency of the power converter, the first primary-side port and the second primary-side port are connected without isolation.

The secondary side comprises a secondary-side port, two secondary-side switching elements, and a secondary-side transformer winding. In a preferential embodiment, the secondary side comprises a single secondary-side port and a single secondary-side transformer winding. The secondary-side transformer winding is magnetically coupled to the primary-side transformer winding. The two primary-side switching elements, the primary-side transformer winding, the two secondary-side switching elements, and the secondary-side transformer winding are arranged to form an isolated DC-DC converter between the primary side and the secondary side. In other words, the two primary-side switching elements, the primary-side transformer winding, the two secondary-side switching elements, and the secondary-side transformer winding are arranged to form an isolated DC-DC converter between the primary-side ports and the secondary-side port. The control unit is further configured to control the two primary-side switching elements and the two secondary-side switching elements for converting power between the primary-side ports and the secondary-side port. The secondary-side switching elements are, for example, JFETs, IGBTs, GaN HEMTs, or MOSFETs

The first primary-side port, the second primary-side port, and the secondary-side port each comprise a pair of terminals, which terminals are for example used to connect to an external electrical circuit. For example, the second primary-side port is connected to a low voltage bus, which connects the three-port isolated active bridge DC-DC power converter to a low voltage battery. For example, the secondary-side port is connected to a high voltage bus, which connects the three-port isolated active bridge DC-DC power converter to a high voltage battery. For example, the first primary-side port is connected to a power generating unit. The power generating unit is for example a solar power generating unit, or a fuel cell, or a wind turbine. For example, the three-port isolated active bridge DC-DC power converter is used in a wind power plant. In this example, a wind power generating unit, such as for example a wind turbine, is connected to the first primary-side port. In another example, the three-port isolated active bridge DC-DC power converter is used in a solar power plant. In this example, a solar power generating unit, such as for example a solar panel, is connected to the first primary-side port. In yet another example, the three-port isolated active bridge DC-DC power converter is used in a fuel cell electric vehicle. In this example, a fuel cell is connected to the first primary-side port.

As such, the three-port isolated active bridge DC-DC power converter provides for an integrated architecture wherein bidirectional power conversion is possible between the first primary-side port, the secondary-side port, and the second primary-side port. The bidirectional power flow is achieved by the use of the primary-side switching elements and the secondary-side switching elements, which are configured to allow for bidirectional power flow. Further, the magnetic coupling of the primary-side transformer winding and the secondary-side transformer winding is arranged for power to flow between the primary side and the secondary side.

The three-port isolated active bridge DC-DC power converter further comprises a blocking switch. The control unit is further configured to open the blocking switch to prevent power flow between the primary side and the secondary side and to close the blocking switch to allow power flow between the primary side and the secondary side. The first primary-side port and the second primary-side port are comprised in the primary side, while the secondary-side port is comprised in the secondary side. If no power flow is required between the primary side and the secondary side, it is desirable to prevent the excitation of the transformer core, which transformer core is formed by the primary-side transformer winding and the secondary-side transformer winding. To prevent the excitation of the transformer core, the three-port isolated active bridge DC-DC power converter comprises a blocking switch. The blocking switch is controlled by the control unit, which control unit opens or closes the blocking switch. If the blocking switch is closed, power flow is allowed between the primary side and the secondary side. This is for example the case to allow a power flow between the first primary-side port and the secondary-side port, and/or a power flow between the second primary-side port and the secondary-side port. If the blocking switch is opened, power flow is prevented between the primary side and the secondary side. This is for example the case to allow a power flow exclusively between the first primary-side port and the second primary-side port. In this case, the secondary side is bypassed, and the transformer core formed by the primary-side transformer winding and the secondary-side transformer winding is not, or minimally, excited.

In an embodiment according to the first aspect of the invention, the first primary-side port is an input power port, being arranged to be connected to an input power source. For example, the input power source is a fuel cell. For another example, the input power source is a solar power generating unit. Further, in the embodiment, the second primary-side port is a low voltage port, being arranged to be connected to a low voltage power storage. For example, the low voltage power storage is a low voltage battery of a vehicle. Further, in the embodiment, the secondary-side port is a high voltage port, being arranged to be connected to a high voltage power storage. For example, the high voltage power storage is a high voltage battery of a vehicle.

In an embodiment according to the first aspect of the invention, the two primary-side switching elements and the primary-side converter inductance are arranged to form a buck converter or a boost converter.

In an embodiment according to the first aspect of the invention, the primary side comprises the blocking switch.

In an embodiment according to the first aspect of the invention, the blocking switch is connected in series to the primary-side transformer winding. By connecting the blocking switch in series to the primary-side transformer winding, the blocking switch is arranged such that it interrupts the power flow between the primary side and the secondary side when opened. Specifically, when the blocking switch is opened, power flow through the primary-side transformer winding and the secondary-side transformer winding is prevented. When the blocking switch is closed, power flow through the primary-side transformer winding and the secondary-side transformer winding is allowed.

In an embodiment according to the first aspect of the invention, the secondary side comprises the blocking switch.

In an embodiment according to the first aspect of the invention, the blocking switch is connected in series to the secondary-side transformer winding. By connecting the blocking switch in series to the secondary-side transformer winding, the blocking switch is arranged such that it interrupts the power flow between the primary side and the secondary side when opened. Specifically, when the blocking switch is opened, power flow through the primary-side transformer winding and the secondary-side transformer winding is prevented. When the blocking switch is closed, power flow through the primary-side transformer winding and the secondary-side transformer winding is allowed.

In an embodiment according to the first aspect of the invention, the primary side comprises two additional primary-side switching elements. The four primary-side switching elements are arranged to form a primary-side full bridge.

An advantage of arranging two additional primary-side switching elements, wherein the four primary-side switching elements form a primary-side full bridge, is that reactive currents in some cases are minimized using the phase shift between the four primary-side switching elements and the two secondary-side switching elements. A further advantage is that the full input voltage, i.e., the voltage supplied through the first primary-side port, is available at the primary-side winding, reducing the current. In the case of a half bridge, half of the input voltage, i.e., half of the voltage supplied through the first primary-side port, is available. Alternatively, the input voltage is the voltage supplied to the primary side through the transformer core.

In an embodiment according to the first aspect of the invention, the secondary side comprises two additional secondary-side switching elements. The four secondary-side switching element are arranged to form a secondary-side full bridge.

An advantage of arranging two additional secondary-side switching elements, wherein the four secondary-side switching elements form a secondary-side full bridge, is that reactive currents can be minimized using the phase shift between the four secondary-side switching elements and the primary-side switching elements. A further advantage is that the full input voltage, i.e., the voltage supplied to the secondary side through the transformer core, is available at the secondary-side port. In the case of a half bridge, half of the input voltage, i.e., half of the voltage supplied to the secondary side through the transformer core, is available. Alternatively, the input voltage is the voltage supplied through the secondary-side port.

In an embodiment according to the first aspect of the invention, the blocking switch comprises two blocking switching elements. The two blocking switching elements are connected in anti-series. By connecting two blocking switching elements in anti-series, power flow in both directions, i.e., from the primary side to the secondary side and from the secondary side to the primary side, is preventable. To close the blocking switch, the control unit is configured to close the two blocking switching elements comprised by the blocking switch. To open the blocking switch, the control unit is configured to open the two blocking switching elements comprised by the blocking switch. The blocking switching elements are, for example, JFETs, IGBTs, GaN HEMTs, or MOSFETs.

In an embodiment according to the first aspect of the invention, the control unit is configured to control the primary-side switching elements and the secondary-side switching elements to generate a phase shift that determines the power transfer between the primary side and the secondary side. When the blocking switch is closed, a power transfer between the primary side and the secondary side is enabled. In other words, power may be transferred between the first primary-side port and the second primary-side port on the one side, and the secondary-side port on the other side. The power transfer to and from the secondary-side port is primarily controlled by the phase shift between the primary-side ports, i.e., comprising the first primary-side port and the second primary-side port, and the secondary-side port. The phase shift between the primary-side ports and the secondary-side port is achieved by the control unit controlling the duty cycle of the primary-side switching elements and the duty cycle of the secondary-side switching elements.

In an embodiment according to the first aspect of the invention, the three-port isolated active bridge DC-DC power converter is configured to enable a power flow from a first power port to a second power port. The first power port is one of the first primary-side port, the second primary-side port, and the secondary-side port. The second power port is one of the first primary-side port, the second primary-side port, and the secondary-side port. The first power port and the second power port are different.

In certain cases, a power flow is exclusively desired between two ports.

For example, a power flow is desired from the first primary-side port to the second primary-side port. For example, this is the case if all power flowing into the first primary-side port is required to power components connected to the second primary-side port. In this example, the blocking switch is opened by the control unit, preventing any power flow between the primary side and the secondary side. Further, the primary side circuitry, in particular the primary-side switching elements, is controlled by the control unit to convert power from the second primary-side port to the first primary-side port. In this case, the converter for example behaves as a buck converter or a boost converter. Specifically, the duty cycle of the primary-side switching elements determines the power transfer from the first primary-side port to the second primary-side port.

For another example, a power flow is desired from the first primary-side port to the secondary-side port. In this case, the power flowing into the first primary-side port is transferred to the secondary side, where it for example can be stored in a power storage, for example in a battery. In another example, it can be used to power components connected to the secondary-side port. In this embodiment, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the first primary-side port to the secondary-side port. In this case, the converter behaves as an isolated DC-DC power converter between the first primary-side port and the secondary-side port. The power transfer to the secondary-side port is primarily controlled by the phase shift between the first primary-side port and the secondary-side port. This phase shift is achieved by the control unit controlling the duty cycle of the primary-side switching elements and the duty cycle of the secondary-side switching elements. In this case, a positive phase shift between the primary-side switching elements and the secondary-side switching elements achieves a power transfer from the first primary-side port to the secondary-side port.

For yet another example, a power flow is desired from the secondary-side port to the second primary-side port. For example, this is the case if power from the secondary-side port is required to power components connected to the second primary-side port. In this example, power is transferred from the secondary-side port to the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the second primary-side port. In this case, the converter behaves as an isolated DC-DC power converter between the secondary-side port and the second primary-side port. The power transfer to the second primary-side port is primarily controlled by the phase shift between the secondary-side port and the second primary-side port. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the second primary-side port. A positive phase shift between the secondary-side port and the second primary-side port implies a negative phase shift between the second primary-side port and the secondary-side port.

In other examples, a power flow is enabled from the second primary-side port to the first primary-side port, or from the secondary-side port to the first primary-side port.

In an embodiment according to the first aspect of the invention, the three-port isolated active bridge DC-DC power converter is configured to enable a power flow from a first power port and a second power port to a third power port. The first power port is one of the first primary-side port, the second primary-side port, and the secondary-side port. The second power port is one of the first primary-side port, the second primary-side port, and the secondary-side port. The third power port is one of the first primary-side port, the second primary-side port, and the secondary-side port. The first power port and the second power port and the third power port are different.

In certain cases, a power flow is desired from two ports to another port.

For example, a power flow is desired from the first primary-side port and the second primary-side port to the secondary-side port. In this case, the power flowing into the first primary-side port and the power flowing into the second primary-side port is transferred to the secondary side, where it for example can be stored in a power storage, for example in a battery. In another example, it can be used to power components connected to the secondary-side port. In this embodiment, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the first primary-side port and the second primary-side port to the secondary-side port. In this case, the converter behaves as an isolated DC-DC power converter between the two primary-side ports and the secondary-side port. The power transfer to the secondary-side port is primarily controlled by the phase shift between the primary-side ports and the secondary-side port. This phase shift is achieved by the control unit controlling the duty cycle of the primary-side switching elements and the duty cycle of the secondary-side switching elements. In this case, a positive phase shift between the primary-side switching elements and the secondary-side switching elements achieves a power transfer from the first primary-side port and the second primary-side port to the secondary-side port.

For another example, a power flow is desired from the secondary-side port and the first primary-side port to the second primary-side port. For example, this is the case if power from the secondary-side port and the first primary-side port is required to power components connected to the second primary-side port. In this example, power is transferred from the secondary-side port and the first primary-side port to the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the second primary-side port. In this case, the converter behaves as an isolated DC-DC power converter between the secondary-side port and the second primary-side port. The power transfer to the second primary-side port is primarily controlled by the phase shift between the secondary-side port and the second primary-side port. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the second primary-side port. A positive phase shift between the secondary-side port and the second primary-side port implies a negative phase shift between the second primary-side port and the secondary-side port. Further, the primary side circuitry, in particular the primary-side switching elements, is controlled by the control unit to convert power from the first primary-side port to the second primary-side port. In this case, the converter additionally behaves as a buck converter or a boost converter. Specifically, the duty cycle of the primary-side switching elements determines the power transfer from the first primary-side port to the second primary-side port.

In another example, a power flow is enabled from the second primary-side port and the secondary-side port to the first primary-side port.

In an embodiment according to the first aspect of the invention, the three-port isolated active bridge DC-DC power converter is configured to enable a power flow from a first power port to a second power port and a third power port. The first power port is one of the first primary-side port, the second primary-side port, and the secondary-side port. The second power port is one of the first primary-side port, the second primary-side port, and the secondary-side port. The third power port is one of the first primary-side port, the second primary-side port, and the secondary-side port. The first power port and the second power port and the third power port are different.

In certain cases, a power flow is desired from a single port to two other ports.

For example, a power flow is desired from the first primary-side port to the second primary-side port and the secondary-side port. In this case, the power flowing into the first primary-side port is transferred to the second primary-side port and the secondary-side port, where it for example can be stored in a power storage, for example in a battery. In another example, it can be used to power components connected to the secondary-side port and/or components connected to the second primary-side port. In this embodiment, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the first primary-side port to the secondary-side port. In this case, the converter behaves as an isolated DC-DC power converter between the first primary-side port and the secondary-side port. The power transfer to the secondary-side port is primarily controlled by the phase shift between the first primary-side port and the secondary-side port. This phase shift is achieved by the control unit controlling the duty cycle of the primary-side switching elements and the duty cycle of the secondary-side switching elements. In this case, a positive phase shift between the primary-side switching elements and the secondary-side switching elements achieves a power transfer from the first primary-side port to the secondary-side port. Further, the primary side circuitry, in particular the primary-side switching elements, is controlled by the control unit to convert power from the first primary-side port to the second primary-side port. In this case, the converter additionally behaves as a buck converter or a boost converter. Specifically, the duty cycle of the primary-side switching elements determines the power transfer from the first primary-side port to the second primary-side port.

For another example, a power flow is desired from the secondary-side port to the first primary-side port and the second primary-side port. For example, this is the case if power from the secondary-side port is required to power components connected to the first primary-side port and components connected to the second primary-side port. In this example, power is transferred from the secondary-side port to the first primary-side port and the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the first primary-side port and the second primary-side port. In this case, the converter behaves as an isolated DC-DC power converter between the secondary-side port and the primary-side ports. The power transfer to the first primary-side port and the second primary-side port is primarily controlled by the phase shift between the secondary-side port and the primary-side ports. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the first primary-side port and the second primary-side port. A positive phase shift between the secondary-side port and the primary-side ports implies a negative phase shift between the primary-side ports and the secondary-side port.

In another example, a power flow is enabled from the second primary-side port to the first primary-side port and the secondary-side port.

According to a second aspect of the invention, the objective is achieved by a three-port isolated active bridge DC-DC power converter system comprising a plurality of three-port isolated active bridge DC-DC power converters according the first aspect of the invention, a first system port, and a second system port. The plurality of three-port isolated active bridge DC-DC power converters are coupled in parallel through their second primary side ports to form the first system port. The plurality of three-port isolated active bridge DC-DC power converters are coupled in series through their secondary-side ports to form the second system port.

To scale the power converter for more power inputs, the three-port isolated active bridge DC-DC power converter system comprises a plurality of three-port isolated active bridge DC-DC power converters. As such, a plurality of first primary-side ports are available for the three-port isolated active bridge DC-DC power converter system. As such, the power converter system is for example configured to be connected to a plurality of power generating units. The power generating units are for example solar power generating units, or fuel cells, or wind turbines.

It is an objective to provide a power converter system with a single secondary-side port and a single second primary-side port. To achieve this objective, the secondary-side ports of the three-port isolated active bridge DC-DC power converters are connected in series. This forms a second system port. By connecting the secondary-side ports of the power converters comprised by the power converter system in series, it is possible for a required voltage gain between the primary side and the secondary side to be reduced. Further, the voltage rating for the semiconductors, i.e., the primary-side switching elements, the secondary-side switching elements, and the blocking switches used in the circuitry of the three-port isolated active bridge DC-DC power converter system is reduced. This increases the reliability of the system and reduces its cost. Further, a high dynamic output voltage range for the second system port is achieved in the architecture. If, for example, the power input from the first primary-side port of a three-port isolated active bridge DC-DC power converter comprised by the power converter system is reduced, then the output voltage, i.e., the voltage of the secondary-side port, is compensated. For example, the power input from the first primary-side port is reduced if the solar irradiance of a solar generating unit connected to the first primary-side port is reduced. In an example, the reduced input power is compensated by transferring the power from the first primary-side port to the first system port instead of to the second system port. In an alternative example, the reduced input power is compensated by additionally transferring power from the first system port to the second system port. In yet an alternative example, the reduced input power is compensated by additionally transferring power from the second system port to the first system port.

In an embodiment according to the second aspect of the invention, the first system port is a low voltage port, being arranged to be connected to a low voltage power storage and the second system port is a high voltage port, being arranged to be connected to a high voltage power storage. For example the high voltage power storage is a high voltage battery in a vehicle, and the low voltage power storage is a low voltage battery in a vehicle.

In an embodiment according to the second aspect of the invention, one of the three-port isolated active bridge DC-DC power converters is designated as a master power converter. The control unit of the master power converter is configured to control the output current of the master power converter based on an output current setpoint. The remaining three-port isolated active bridge DC-DC power converters are designated as slave power converters. The control unit of each of the slave power converters is configured to control the output voltage of its respective slave power converter to match the output voltage of the master power converter. Alternatively, the control unit of each of the slave power converters is configured to control the output voltage of its respective slave power converter to be the inverse of the product of the number of three-port isolated active bridge DC-DC power converters of the three-port isolated active bridge DC-DC power converter system and the output voltage of the second system port.

In a case where power is transferred from the primary-side ports to the secondary-side port, a control strategy is employed by the three-port isolated active bridge DC-DC power converters comprised by the power converter system. The primary-side ports are the first primary-side ports and/or the first system port. The secondary-side port is the second system port. A constraint for the control strategy is that the output voltage of the second system port is fixed. For example, the output voltage of the second system port is 380V. The control strategy is designed such that the output voltages of the individual three-port isolated active bridge DC-DC power converters is balanced. To achieve this objective, one of the three-port isolated active bridge DC-DC power converter comprised by the power converter system is designated as the master power converter. The master power converter receives an output current setpoint. For example, the output current setpoint is 1A, or 2A, or 5A, or 10A. The control unit of the master power converter is configured such that the output current of the master power converter is controlled based on the output current setpoint and the output voltage of the second system port. The output current is the output current flowing to the secondary-side port of the master power converter. The slave power converters are connected in series through their secondary-side ports to the secondary-side port of the master power converter. While the master power converter controls its output current, the slave power converters control their output voltages to match the output voltage of the master power converter. The output voltage of each slave power converter is the output voltage of the secondary-side port of the respective slave power converter. The output voltage of the master power converter is the output voltage of the secondary-side port of the master power converter. Alternatively, the slave power converters control their output voltages to be the inverse of the product of the number of three-port isolated active bridge DC-DC power converters of the three-port isolated active bridge DC-DC power converter system and the output voltage of the second system port. In this last case, the voltage output of each slave power converter is based on the formula $\frac{{V}_{HV}}{{nr}_{pc}}$, wherein nr_{pc} is the number of three-port isolated active bridge DC-DC power converters of the three-port isolated active bridge DC-DC power converter system and V_{HV} is the output voltage of the second system port. In this way, the voltage output of the individual three-port isolated active bridge DC-DC power converters is balanced. The voltage output of the individual three-port isolated active bridge DC-DC power converters is controlled by controlling the phase shift between their primary-side ports and their secondary-side ports.

According to a third aspect according to the invention, the objective is achieved by a multi-port isolated active bridge DC-DC power converter, comprising a control unit, a primary side, and a secondary side.

The primary side comprises a plurality of first primary-side ports, a second primary-side port, two primary-side switching elements for each first primary-side port, a primary-side converter inductance for each first primary-side port, and a primary-side transformer winding for each first primary-side port. Each pair of primary-side switching elements and a respective primary-side converter inductance are arranged to form a half-bridge arrangement for bidirectionally converting power between a respective first primary-side port and the second primary-side port. The control unit is configured to control each pair of primary-side switching elements to convert power between a respective first primary-side port and the second primary-side port. The primary-side switching elements are, for example, JFETs, IGBTs, GaN HEMTs, or MOSFETs.

The primary-side circuit is arranged such that it forms, for each first primary-side port, a power converter between the respective first primary-side port and the second primary-side port. For example, in the case that the voltage is to be stepped down between a respective first primary-side port and the second primary-side port, the primary side forms, for each first primary-side port, a buck converter between the respective first primary-side port and the second primary-side port. For another example, in the case that the voltage is to be stepped up between a respective first primary-side port and the second primary-side port, the primary side forms, for each first primary-side port, a boost converter between the respective first primary-side port and the second primary-side port. To increase the efficiency of the power converter, the first primary-side ports and the second primary-side port are connected without isolation.

The secondary side comprises a secondary-side port, two secondary-side switching elements, and a secondary-side transformer winding. In a preferential embodiment, the secondary side comprises a single secondary-side transformer winding. The secondary-side transformer winding is magnetically coupled to the primary-side transformer winding. The primary-side switching elements, the primary-side transformer windings, the two secondary-side switching elements, and the secondary-side transformer winding are arranged to form an isolated DC-DC converter between the primary side and the secondary side. In other words, the primary-side switching elements, the primary-side transformer windings, the two secondary-side switching elements, and the secondary-side transformer winding are arranged to form an isolated DC-DC converter between the plurality of first primary-side ports and the secondary-side port. The control unit is further configured to control the primary-side switching elements and the two secondary-side switching elements for converting power between the primary-side ports and the secondary-side port. The secondary-side switching elements are, for example, JFETs, IGBTs, GaN HEMTs, or MOSFETs.

The first primary-side ports, the second primary-side port, and the secondary-side port each comprise a pair of terminals, which terminals are for example used to connect to an external electrical circuit. For example, the second primary-side port is connected to a low voltage bus, which connects the multi-port isolated active bridge DC-DC power converter to a low voltage battery. For example, the secondary-side port is connected to a high voltage bus, which connects the multi-port isolated active bridge DC-DC power converter to a high voltage battery. For example, the first primary-side ports each connect to a power generating unit. The power generating unit is for example a solar power generating unit, or a fuel cell, or a wind turbine. For example, the multi-port isolated active bridge DC-DC power converter is used in a wind power plant. In this example, a wind power generating unit, such as for example a wind turbine, is connected to a respective first primary-side port. In another example, the multi-port isolated active bridge DC-DC power converter is used in a solar power plant. In this example, a solar power generating unit, such as for example a solar panel, is connected to a respective first primary-side port. In yet another example, the multi-port isolated active bridge DC-DC power converter is used in a fuel cell electric vehicle. In this example, a fuel cell is connected to a respective first primary-side port.

As such, the multi-port isolated active bridge DC-DC power converter provides for an integrated architecture wherein bidirectional power conversion is possible between the first primary-side ports, the secondary-side port, and the second primary-side port. The bidirectional power flow is achieved by the use of the primary-side switching elements and the secondary-side switching elements, which are configured to allow for bidirectional power flow. Further, the magnetic coupling of the primary-side transformer windings and the secondary-side transformer winding is arranged for power to flow between the primary side and the secondary side.

In an embodiment according to the third aspect of the invention, each first primary-side port is an input power port, being arranged to be connected to an input power source. For example, the input power source is a fuel cell. For another example, the input power source is a solar power generating unit. Further, in the embodiment, the second primary-side port is a low voltage port, being arranged to be connected to a low voltage power storage. For example, the low voltage power storage is a low voltage battery of a vehicle. Further, in the embodiment, the secondary-side port is a high voltage port, being arranged to be connected to a high voltage power storage. For example, the high voltage power storage is a high voltage battery of a vehicle.

In an embodiment according to the third aspect of the invention, each pair of primary-side switching elements and the respective primary-side converter inductance are arranged to form a buck converter or a boost converter.

In an embodiment according to the third aspect of the invention, the primary side comprises two additional primary-side switching elements for each first primary-side port. Each quadruple of primary-side switching elements are arranged to form a primary-side full bridge for each first primary-side port.

An advantage of arranging two additional primary-side switching elements for each first primary-side port, wherein each quadruple of primary-side switching elements form a primary-side full bridge for each first primary-side port, is that reactive currents in some cases are minimized using the phase shift between the quadruple of primary-side switching elements and the two secondary-side switching elements. A further advantage is that the full input voltage, i.e., the voltage supplied through a respective first primary-side port, is available at a respective primary-side winding, reducing the current. In the case of a half bridge, half of the input voltage, i.e., half of the voltage supplied through the respective first primary-side port, is available. Alternatively, the input voltage is the voltage supplied to the primary side through the transformer core.

In an embodiment according to the third aspect of the invention, the secondary side comprises two additional secondary-side switching elements. The four secondary-side switching element are arranged to form a secondary-side full bridge.

An advantage of arranging two additional secondary-side switching elements, wherein the four secondary-side switching elements form a secondary-side full bridge, is that reactive currents can be minimized using the phase shift between the four secondary-side switching elements and the primary-side switching elements. A further advantage is that the full input voltage, i.e., the voltage supplied to the secondary side through the transformer core, is available at the secondary-side port. In the case of a half bridge, half of the input voltage, i.e., half of the voltage supplied to the secondary side through the transformer core, is available. Alternatively, the input voltage is the voltage supplied through the secondary-side port.

In an embodiment according to the third aspect of the invention, the multi-port isolated active bridge DC-DC power converter comprises a blocking switch for each first primary-side port. The control unit is further configured to open the blocking switches to prevent power flow between the primary side and the secondary side and to close the blocking switches to allow power flow between the primary side and the secondary side.

The primary side comprises the first primary-side ports and the second primary-side port, while the secondary-side port is comprised by the secondary side. If no power flow is required between the primary side and the secondary side, it is desirable to prevent the excitation of the transformer core, which transformer core is formed by the primary-side transformer windings and the secondary-side transformer winding. To prevent or minimize the excitation of the transformer core, the multi-port isolated active bridge DC-DC power converter comprises a blocking switch for each first primary-side port. The blocking switches are controlled by the control unit, which opens or closes the blocking switches. If the blocking switches are closed, power flow is allowed between the primary side and the secondary side. This is for example the case to allow a power flow between the first primary-side ports and the secondary-side port, and/or a power flow between the second primary-side port and the secondary-side port. If the blocking switches are opened, power flow is prevented between the primary side and the secondary side. This is for example the case to allow a power flow exclusively between the first primary-side ports and the second primary-side port. In this case, the secondary side is bypassed, and the transformer core, formed by the primary-side transformer windings and the secondary-side transformer winding, is not, or minimally, excited.

In an embodiment according to the third aspect of the invention, the primary side comprises the blocking switches.

In an embodiment according to the third aspect of the invention, each blocking switch is connected in series to a respective primary-side transformer winding. By connecting each blocking switch in series to a respective primary-side transformer winding, the blocking switches are arranged such that each one of the blocking switches interrupts the power flow between a single first primary-side port of the primary side and the secondary side when opened. Specifically, when a blocking switch is opened, power flow through a respective primary-side transformer winding and the secondary-side transformer winding is prevented. When the blocking switch is closed, power flow through the respective primary-side transformer winding and the secondary-side transformer winding is allowed. In the case that all blocking switches are opened, power flow between the primary side and the secondary side is prevented. In the case that all blocking switches are closed, power flow through all primary-side transformer windings and the secondary-side transformer winding is allowed.

In an embodiment according to the third aspect of the invention, the secondary side further comprises a blocking switch. The control unit is further configured to open the blocking switch to prevent power flow between the primary side and the secondary side and to close the blocking switch to allow power flow between the primary side and the secondary side.

The primary side comprises the first primary-side ports and the second primary-side port, while the secondary-side port is comprised by the secondary side. If no power flow is required between the primary side and the secondary side, it is desirable to prevent or minimize the excitation of the transformer core, which transformer core is formed by the primary-side transformer windings and the secondary-side transformer winding. To prevent the excitation of the transformer core, the secondary side comprises a blocking switch. The blocking switch is controlled by the control unit, which opens or closes the blocking switch. If the blocking switch is closed, power flow is allowed between the primary side and the secondary side. This is for example the case to allow a power flow between the first primary-side ports and the secondary-side port, and/or a power flow between the second primary-side port and the secondary-side port. If the blocking switch is opened, power flow is prevented between the primary side and the secondary side. This is for example the case to allow a power flow exclusively between the first primary-side ports and the second primary-side port. In this case, the secondary side is bypassed, and the transformer core, formed by the primary-side transformer windings and the secondary-side transformer winding, is not, or minimally, excited.

In an embodiment according to the third aspect of the invention, the blocking switch is connected in series to the secondary-side transformer winding. By connecting the blocking switch in series to the secondary-side transformer winding, the blocking switch is arranged such that the blocking switch interrupts the power flow between the secondary side and the primary side when opened. Specifically, when the blocking switch is opened, power flow through the secondary-side transformer winding and the primary-side transformer windings is prevented. When the blocking switch is closed, power flow through the primary-side transformer windings and the secondary-side transformer winding is allowed.

In an embodiment according to the third aspect of the invention, each blocking switch comprises two blocking switching elements. Each pair of blocking switching elements is connected in anti-series. By connecting two blocking switching elements in anti-series, power flow in both directions, i.e., from the primary side to the secondary side and from the secondary side to the primary side, is preventable. To close the blocking switches, the control unit is configured to close the pair of blocking switching elements comprised by each blocking switch. To open the blocking switches, the control unit is configured to open the pair of blocking switching elements comprised by each blocking switch. The blocking switching elements are, for example, JFETs, IGBTs, GaN HEMTs, or MOSFETs.

In an embodiment according to the third aspect of the invention, the control unit is configured to control the primary-side switching elements and the secondary-side switching elements to generate a phase shift that determines the power transfer between the primary side and the secondary side. When the blocking switching elements are closed, a power transfer between the primary side and the secondary side is enabled. In other words, power may be transferred between the first primary-side ports and the second primary-side port on the one side, and the secondary-side port on the other side. The power transfer to and from the secondary-side port is primarily controlled by the phase shift between the primary-side ports, i.e., the first primary-side ports and the second primary-side port, and the secondary-side port. The phase shift between the primary-side ports and the secondary-side port is achieved by the control unit controlling the duty cycle of the primary-side switching elements and the duty cycle of the secondary-side switching elements.

In an embodiment according to the third aspect of the invention, the multi-port isolated active bridge DC-DC power converter is configured to enable a power flow from a first power port to a second power port. The first power port is one of the second primary-side port and the secondary-side port. The second power port is one of the second primary-side port and the secondary-side port. The first power port and the second power port are different.

In certain cases, a power flow is exclusively desired between two ports.

For example, a power flow is desired from the secondary-side port to the second primary-side port. For example, this is the case if power from the secondary-side port is required to power components connected to the second primary-side port. In this example, power is transferred from the secondary-side port to the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the second primary-side port. In this case, the converter behaves as an isolated DC-DC power converter between the secondary-side port and the second primary-side port. The power transfer to the second primary-side port is primarily controlled by the phase shift between the secondary-side port and the second primary-side port. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the second primary-side port. A positive phase shift between the secondary-side port and the second primary-side port implies a negative phase shift between the second primary-side port and the secondary-side port.

In another example, a power flow is enabled from the second primary-side port to the secondary-side port.

In an embodiment according to the third aspect of the invention, the multi-port isolated active bridge DC-DC power converter is configured to enable a power flow from each of the first primary-side power ports to a first power port. The first power port is one of the second primary-side port and the secondary-side port.

In certain cases, a power flow is exclusively desired between the first primary-side ports and another port.

For example, a power flow is desired from each of the first primary-side ports to the second primary-side port. For example, this is the case if all power flowing into the first primary-side ports is required to power components connected to the second primary-side port. In this example, the blocking switch is opened by the control unit, preventing any power flow between the primary side and the secondary side. Further, the primary side circuitry, in particular the primary-side switching elements, is controlled by the control unit to convert power from the first primary-side ports to the second primary-side port. In this case, the converter for example behaves as a buck converter or a boost converter. Specifically, the duty cycle of the primary-side switching elements determines the power transfer from each of the first primary-side ports to the second primary-side port.

In another example, a power flow is enabled from each of the first primary-side ports to the secondary-side port.

In an embodiment according to the third aspect of the invention, the multi-port isolated active bridge DC-DC power converter is configured to enable a power flow from each of the first primary-side power ports and a first power port to a second power port. The first power port is one of the second primary-side port and the secondary-side port. The second power port is one of the second primary-side port and the secondary-side port. The first power port and the second power port are different.

In certain cases, a power flow is desired from each of the first primary ports and a power port to another power port.

For example, a power flow is desired from each of the first primary-side ports and the second primary-side port to the secondary-side port. In this case, the power flowing into each of the first primary-side ports and the power flowing into the second primary-side port is transferred to the secondary-side port, where it for example can be stored in a power storage, for example in a battery. In another example, it can be used to power components connected to the secondary-side port. In this embodiment, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from each of the first primary-side ports and the second primary-side port to the secondary-side port. In this case, the converter behaves as an isolated DC-DC power converter between the primary-side ports and the secondary-side port. The power transfer to the secondary-side port is primarily controlled by the phase shift between each of the first primary-side ports, the second primary-side port and the secondary-side port. This phase shift is achieved by the control unit controlling the duty cycle of the primary-side switching elements and the duty cycle of the secondary-side switching elements. In this case, a positive phase shift between the primary-side switching elements and the secondary-side switching elements achieves a power transfer from the first primary-side port and the second primary-side ports to the secondary-side port.

For another example, a power flow is desired from each of the first primary-side ports and the secondary-side port to the second primary-side port. For example, this is the case if power from the secondary-side port and each of the first primary-side ports is required to power components connected to the second primary-side port. In this example, power is transferred from the secondary-side port and the first primary-side port to the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the second primary-side port. In this case, the converter behaves as an isolated DC-DC power converter between the secondary-side port and the second primary-side port. The power transfer to the second primary-side port is primarily controlled by the phase shift between the secondary-side port and the second primary-side port. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the second primary-side port. A positive phase shift between the secondary-side port and the second primary-side port implies a negative phase shift between the second primary-side port and the secondary-side port. Further, the primary side circuitry, in particular the primary-side switching elements, is controlled by the control unit to convert power from each of the first primary-side ports to the second primary-side port. In this case, the converter additionally behaves, for example, as a buck converter or a boost converter. Specifically, the duty cycle of the primary-side switching elements determines the power transfer from each of the first primary-side ports to the second primary-side port.

In an embodiment according to the third aspect of the invention, the multi-port isolated active bridge DC-DC power converter is configured to enable a power flow from a first power port to each of the first primary-side power ports. The first power port is one of the second primary-side port and the secondary-side port.

In an embodiment according to the third aspect of the invention, the multi-port isolated active bridge DC-DC power converter is configured to enable a power flow from a first power port to each of the first primary-side power ports and a second power port. The first power port is one of the second primary-side port and the secondary-side port. The second power port is one of the second primary-side port and the secondary-side port. The first power port and the second power port are different.

In certain cases, a power flow is desired from a single port to each of the first primary-side ports and another port.

For example, a power flow is desired from the secondary-side port to each of the first primary-side ports and the second primary-side port. For example, this is the case if power from the secondary-side port is required to power components connected to the first primary-side ports and components connected to the second primary-side port. In this example, power is transferred from the secondary-side port to the first primary-side ports and the second primary-side port. In this example, the blocking switch is closed by the control unit, allowing power to flow between the primary side and the secondary side. Further, the primary-side circuitry, in particular the primary-side switching elements, as well as the secondary-side circuitry, in particular the secondary-side switching elements, are controlled by the control unit to convert power from the secondary-side port to the first primary-side ports and the second primary-side port. In this case, the converter behaves as an isolated DC-DC power converter between the secondary side and the primary side. The power transfer to the first primary-side ports and the second primary-side port is primarily controlled by the phase shift between the secondary-side port and the primary-side ports. This phase shift is achieved by the control unit controlling the duty cycle of the primary-side switching elements and the duty cycle of the secondary-side switching elements. In this case, a positive phase shift between the secondary-side switching elements and the primary-side switching elements achieves a power transfer from the secondary-side port to the first primary-side ports and the second primary-side port. A positive phase shift between the secondary-side port and the primary-side ports implies a negative phase shift between the primary-side ports and the secondary-side port.

In another example, a power flow is enabled from the second primary-side port to the first primary-side ports and the secondary-side port.

According to a fourth aspect of the invention, the objective is achieved by a multi-port isolated active bridge DC-DC power converter system comprising a plurality of multi-port isolated active bridge DC-DC power converters according the third aspect of the invention, a first system port, and a second system port. The plurality of multi-port isolated active bridge DC-DC power converters are coupled in parallel through their second primary side ports to form the first system port. The plurality of multi-port isolated active bridge DC-DC power converters are coupled in series through their secondary-side ports to form the second system port.

To scale the power converter for more power inputs, the multi-port isolated active bridge DC-DC power converter system comprises a plurality of multi-port isolated active bridge DC-DC power converters. As such, a plurality of first primary-side ports are available for the multi-port isolated active bridge DC-DC power converter system. As such, the power converter system is for example configured to be connected to a plurality of power generating units. The power generating units are for example solar power generating units, or fuel cells, or wind turbines.

It is an objective to provide a power converter system with a single secondary-side port and a single second primary-side port. To achieve this objective, the secondary-side ports of the multi-port isolated active bridge DC-DC power converters are connected in series. This forms a second system port. By connecting the secondary-side ports in series, it is possible for a required voltage gain between the primary side and the secondary side to be reduced. Further, the voltage rating for the semiconductors, i.e., the primary-side switching elements, the secondary-side switching elements, and the blocking switches, used in the circuitry of the multi-port isolated active bridge DC-DC power converter system, is reduced. This increases the reliability of the system and reduces its cost. Further, a high dynamic output voltage range for the second system port is achieved in the architecture. If, for example, the power input of any of the first primary-side ports of a multi-port isolated active bridge DC-DC power converter comprised by the power converter system is reduced, then the output voltage, i.e., the voltage of the secondary-side port, is compensated. For example, the power input from a first primary-side port is reduced if the solar irradiance of a solar generating unit connected to that first primary-side port is reduced. In an example, the reduced input power is compensated by transferring the power from the first primary-side ports to the first system port instead of the second system port. In an alternative example, the reduced input power is compensated by additionally transferring power from the first system port to the second system port. In yet an alternative example, the reduced input power is compensated by additionally transferring power from the second system port to the first system port.

In an embodiment according to the fourth aspect of the invention, the first system port is a high voltage port, being arranged to be connected to a high voltage power storage and the second system port is a low voltage port, being arranged to be connected to a low voltage power storage. For example the high voltage power storage is a high voltage battery in a vehicle, and the low voltage power storage is a low voltage battery in a vehicle.

In an embodiment according to the fourth aspect of the invention, one of the multi-port isolated active bridge DC-DC power converters is designated as a master power converter. The control unit of the master power converter is configured to control the output current of the master power converter based on an output current setpoint. The remaining multi-port isolated active bridge DC-DC power converters are designated as slave power converters. The control unit of each of the slave power converters is configured to control the output voltage of its respective slave power converter to match the output voltage of the master power converter. Alternatively, the control unit of each of the slave power converters is configured to control the output voltage of its respective slave power converter to be the inverse of the product of the number of multi-port isolated active bridge DC-DC power converters of the multi-port isolated active bridge DC-DC power converter system and the output voltage of the first system port.

In a case where power is transferred from the primary-side ports to the secondary-side port, a control strategy is employed by the multi-port isolated active bridge DC-DC power converters comprised by the power converter system. The primary-side ports are the first primary-side ports and/or the first system port. The secondary-side port is the second system port. A constraint for the control strategy is that the output voltage of the second system port is fixed. For example, the output voltage of the second system port is 380V. The control strategy is designed such that the output voltages of the individual multi-port isolated active bridge DC-DC power converters is balanced. To achieve this objective, one of the multi-port isolated active bridge DC-DC power converter is designated as the master power converter. The master power converter receives an output current setpoint. For example, the output current setpoint is 1A, or 2A, or 5A, or 10A. The control unit of the master power converter is configured such that the output current of the master power converter is controlled based on the output current setpoint and the output voltage of the second system port. The output current is the output current flowing to the secondary-side port of the master power converter. The slave power converters are connected in series through their secondary-side ports to the secondary-side port of the master power converter. While the master power converter controls its output current, the slave power converters control their output voltages to match the output voltage of the master power converter. The output voltage of each slave power converter is the output voltage of the secondary-side port of the respective slave power converter. The output voltage of the master power converter is the output voltage of the secondary-side port of the master power converter. Alternatively, the slave power converters control their output voltages to be the inverse of the product of the number of multi-port isolated active bridge DC-DC power converters of the multi-port isolated active bridge DC-DC power converter system and the output voltage of the second system port. In this last case, the voltage output of each slave power converter is based on the formula $\frac{{V}_{HV}}{{nr}_{pc}}$, wherein nr_{pc} is the number of multi-port isolated active bridge DC-DC power converters of the three-port isolated active bridge DC-DC power converter system and V_{HV} is the output voltage of the second system port. In this way, the voltage output of the individual multi-port isolated active bridge DC-DC power converters is balanced. The voltage output of the individual multi-port isolated active bridge DC-DC power converters is controlled by controlling the phase shift between their primary-side ports and their secondary-side ports.

According to a fifth aspect of the invention, the objective is achieved by a solar power assembly, comprising a plurality of solar power generating units and a power converter system. The power converter system is either a three-port isolated active bridge DC-DC power converter system according to the second aspect of the invention or a multi-port isolated active bridge DC-DC power converter system according to the fourth aspect of the invention. Each solar power generating unit of the plurality of solar power generating units is connected to a first primary-side port of the power converter system.

The power converter system comprises a plurality of first primary-side ports, for example, 2 or 4 or 10 or 24. The first primary-side ports are comprised by the power converters comprised by the power converter system. For example, 24 first primary-side ports of the power converter system are comprised by 12 multi-port isolated active bridge DC-DC power converter systems, each comprising 2 first primary-side ports. Each first primary-side port is arranged to be connected to a power generating unit. For example, the power generating units are solar power generating units, or fuel cells, or wind turbines. According to the fifth aspect of the invention, the solar power generating units are solar power generating units. For example, the solar power generating units are solar panels, or strips of solar cells. For example, the solar power generating units are configured to be arranged on a surface, such as for example the body of a vehicle. The power that is generated by the individual solar power generating units is to be converted for further use. In order to achieve this goal, each solar power generating unit is electrically connected to a first primary-side port of the power converter system. The power converter system is configured to transform the input power generated by the solar power generating units to output power, flowing out of its first system port and/or its second system port.

According to a sixth aspect of the invention, the objective is achieved by a vehicle, comprising: a body, a solar power assembly according to the fifth aspect of the invention, a low voltage battery, and a high voltage battery. The plurality of solar power generating units of the solar power assembly are mechanically attached to the body. The low voltage battery is connected to the first system port of the power converter system of the solar power assembly and the high voltage battery is connected to the second system port of the power converter system of the solar power assembly.

The vehicle comprises a low voltage battery, which is connected to a low voltage bus, wherein the low voltage bus powers certain electrical components of the vehicle. The electrical components powered by the low voltage bus include, for example, electrically powered windows and the lights of the vehicle. The vehicle further comprises a high voltage battery, which is connected to a high voltage bus. The high voltage bus powers certain electrical components of the vehicle. The electrical components powered by the high voltage bus include, for example, the HVAC system and an electromotor or multiple electromotors for propelling the vehicle. The low voltage battery is electrically connected, through the low voltage bus, to the first system port of the power converter system. This allows power to flow from and to the low voltage battery. The high voltage battery is electrically connected, through the high voltage bus, to the second system port of the power converter system. This allows power to flow from and to the high voltage battery.

By mechanically attaching the plurality of solar power generating units of the solar power assembly to the body of the vehicle, and electrically connecting them to the power converter system, the solar power generating units generate power when they are exposed to the sun. The power generated by the solar power generating units flows through the first primary-side port with which they are electrically connected to the power converter system. The power converter system is configured to convert the power generated by the solar power generating units such that it can be used by the vehicle, in particular by its low voltage battery and high voltage battery.

In this way, a partially autonomous vehicle is provided, which vehicle is configured to power its electrical components using power generated by its solar power generating units.

### BRIEF DESCRIPTION OF THE FIGURES

The invention is described below with reference to the figures. These figures serve as examples to illustrate the invention, and will not be construed as limiting the scope of the claims. In the different figures, like features are indicated by the like reference numerals.

In the figures:
Fig.1 schematically shows a three-port active bridge DC-DC power converter according to a first embodiment of the first aspect of the invention.
Fig. 2 schematically shows a three-port active bridge DC-DC power converter according to a second embodiment of the first aspect of the invention.
Fig. 3 schematically shows a three-port active bridge DC-DC power converter according to a third embodiment of the first aspect of the invention.
Fig. 4 schematically shows a multi-port isolated active bridge DC-DC power converter according to a first embodiment of the third aspect of the invention.
Fig. 5 schematically shows a multi-port isolated active bridge DC-DC power converter according to a second embodiment of the third aspect of the invention.
Fig. 6a schematically shows a three-port isolated active bridge DC-DC power converter system according to an embodiment of the second aspect of the invention.
Fig. 6b schematically shows a multi-port isolated active bridge DC-DC power converter system according to an embodiment of the fourth aspect of the invention.
Fig. 7 schematically shows a solar power assembly according to an embodiment of the fifth aspect of the invention.
Fig. 8 schematically shows a vehicle according to an embodiment of the sixth aspect of the invention.

### DETAILED DESCRIPTION

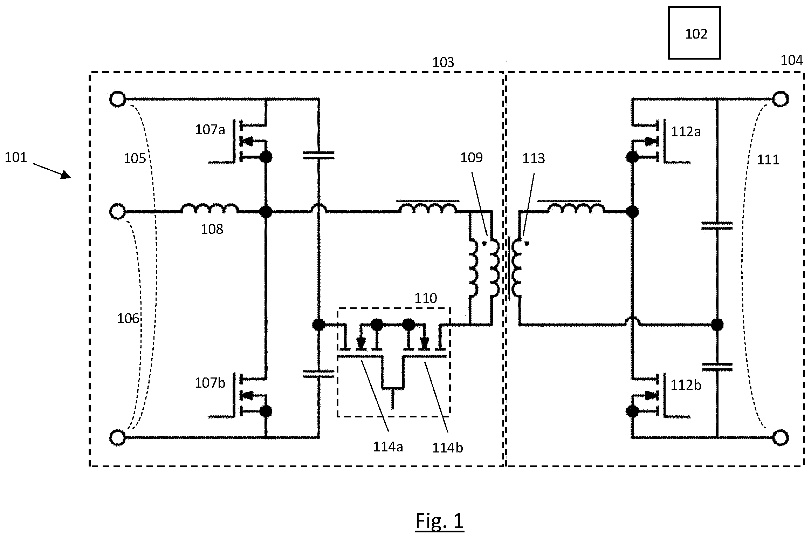

Fig. 1, Fig. 2, and Fig. 3 schematically show a three-port active bridge DC-DC power converter (101) according to a first, second, and third embodiment of the first aspect of the invention. In the figure, the three-port isolated active bridge DC-DC power converter (101) comprises a control unit (102), a primary side (103), and a secondary side (104).

The primary side comprises a first primary-side port (105), a second primary-side port (106), two primary-side switching elements (107a, 107b), a primary-side converter inductance (108), a primary-side transformer winding (109), and a blocking switch (110). The two primary-side switching elements (107a, 107b) and the primary-side converter inductance (108) are arranged to form a buck converter for converting power between the first primary-side port (105) and the second primary-side port (106). The control unit (102) is configured to control the two primary-side switching elements (107a, 107b) to convert power between the first primary-side port (105) and the second primary-side port (106).

The secondary side (104) comprises a secondary-side port (111), two secondary-side switching elements (112a, 112b), and a secondary-side transformer winding (113), magnetically coupled to the primary-side transformer winding (109). The two primary-side switching elements (107a, 107b), the primary-side transformer winding (109), the two secondary-side switching elements (112a, 112b) and the secondary-side transformer winding (113) are arranged to form an isolated DC-DC converter between the primary-side ports (105, 106) and the secondary-side port (111). The control unit (102) is configured to open the blocking switch (110) to prevent power flow between the primary side (103) and the secondary side (104) and to close the blocking switch (110) to allow power flow between the primary side (103) and the secondary side (104). The control unit (102) is further configured to control the two primary-side switching elements (107a, 107b) and the two secondary-side switching elements (112a, 112b) for converting power between the primary-side ports (105, 106) and the secondary-side port (111).

The blocking switch (110) comprises two blocking switching elements (114a, 114b), the two blocking switching elements (114a, 114b) being connected in anti-series. The two blocking switching elements (114a, 114b) are connected in series to the primary-side transformer winding (109). The blocking switching elements (114a, 114b) are arranged such that they interrupt the power flow between the primary side (103) and the secondary side (104) when opened. When the blocking switching elements (114a, 114b) are opened, the three-port isolated active bridge DC-DC power converter (101) is configured to prevent or minimize a power flow from the first primary-side port (105) to the second primary-side port (106).

The blocking switching elements (114a, 114b) are arranged such that they allow a power flow between the primary side (103) and the secondary side (104) when closed. When the blocking switching elements (114a, 114b) are closed, the three-port isolated active bridge DC-DC power converter (101) is configured to enable a power flow from the first primary-side port (105) to the secondary-side port (111). Further, when the blocking switching elements (114a, 114b) are closed, the three-port isolated active bridge DC-DC power converter (101) is configured to enable a power flow from the secondary-side port (111) to the second primary-side port (106). Further, when the blocking switching elements (114a, 114b) are closed, the three-port isolated active bridge DC-DC power converter (101) is configured to enable a power flow from the second primary-side port (106) to the secondary-side port (111). Further, when the blocking switching elements (114a, 114b) are closed, the three-port isolated active bridge DC-DC power converter (101) is configured to enable a power flow from the second primary-side port (106) and the first primary-side port (105) to the secondary-side port (111). Further, when the blocking switching elements (114a, 114b) are closed, the three-port isolated active bridge DC-DC power converter (101) is configured to enable a power flow from the secondary-side port (111) and the first primary-side port (105) to the second primary-side port (106). Further, when the blocking switching elements (114a, 114b) are closed, the three-port isolated active bridge DC-DC power converter (101) is configured to enable a power flow from the first primary-side port (105) to the second primary-side port (106) and the secondary-side port (111). Further, the three-port isolated active bridge DC-DC power converter (101) is configured to enable a power flow from the second primary-side port (106) and/or from the secondary-side port (111) to the first primary-side port (105).

The power flows in the three-port isolated active bridge DC-DC power converter (101) are controlled by the control unit (102) controlling the switching of the primary-side switching elements (107a, 107b) and the secondary-side switching elements (112a, 112b). When power is converted from the first primary-side port (105) to the second primary-side port (106), the three-port isolated active bridge DC-DC power converter (101) acts as a buck converter between the first primary-side port (105) and the second primary-side port (106). Additionally, when power is converted between the primary side (103) and the secondary side (104), the three-port isolated active bridge DC-DC power converter (101) acts as an isolated DC-DC power converter between the primary side (103) and the secondary side (104). Specifically, the three-port isolated active bridge DC-DC power converter (101) is configured to allow bidirectional power flow to and from all its ports, in particular from and to the second primary-side port (106) and from and to the secondary-side port (111) and from and to the first primary-side port (105). To achieve these bidirectional power flows, the control unit (102) is configured to control the primary-side switching elements (107a, 107b) and the secondary-side switching elements (112a, 112b) to generate a phase shift that determines the power transfer between the primary side (103) and the secondary side (104). In particular, a positive phase shift between the primary-side ports (105, 106) and the secondary-side port (111) results in a power flow to the secondary-side port (111). A negative phase shift between the primary-side ports (105, 106) and the secondary-side port (111) results in a power flow to the second primary-side port (106) and/or the first primary-side port (105).

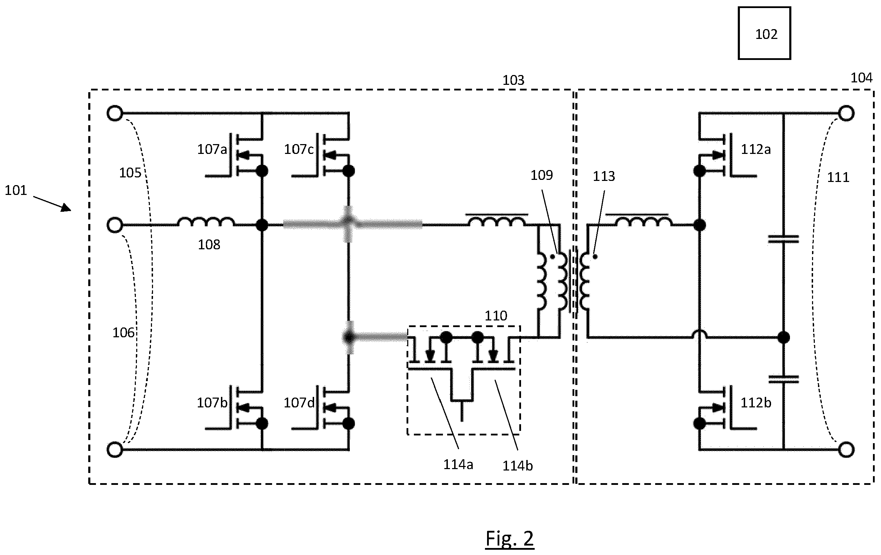

Fig. 2 schematically shows a three-port active bridge DC-DC power converter (101) according to the second embodiment of the first aspect of the invention. Compared to the first embodiment of the first aspect of the invention, which first embodiment is schematically shown in Fig. 1, the primary side (103) comprises two additional primary-side switching elements (107c, 107d). The four primary-side switching elements (107a, 107b, 107c, 107d) are arranged to form a primary-side full bridge. An advantage of arranging the two additional primary-side switching elements (107c, 107d), wherein the four primary-side switching elements (107a, 107b, 107c, 107d) form a primary-side full bridge, is that reactive currents can be minimized using the phase shift between the four primary-side switching elements (107a, 107b, 107c, 107d) and the two secondary-side switching elements (112a, 112b). A further advantage is that the full input voltage, i.e., the voltage supplied through the first primary-side port (105) and/or the second primary-side port (106), is available at the primary-side winding (109). In the case of a half bridge, half of the input voltage is available.

The power flows in the three-port isolated active bridge DC-DC power converter (101) are controlled by the control unit (102) controlling the switching of the primary-side switching elements (107a, 107b, 107c, 107d) and the secondary-side switching elements (112a, 112b). When power is converted from the first primary-side port (105) to the second primary-side port (106), the three-port isolated active bridge DC-DC power converter (101) acts as a buck converter between the first primary-side port (105) and the second primary-side port (106). Additionally, when power is converted between the primary side (103) and the secondary side (104), the three-port isolated active bridge DC-DC power converter (101) acts as an isolated DC-DC power converter between the primary side (103) and the secondary side (104). Specifically, the three-port isolated active bridge DC-DC power converter (101) is configured to allow bidirectional power flow to and from all its ports, in particular from and to the second primary-side port (106) and the secondary-side port (111). To achieve these bidirectional power flows, the control unit (101) is configured to control the primary-side switching elements (107a, 107b, 107c, 107d) and the secondary-side switching elements (112a, 112b) to generate a phase shift that determines the power transfer between the primary side (103) and the secondary side (104). In particular, a positive phase shift between the primary-side ports (105, 106) and the secondary-side port (111) results in a power flow to the secondary-side port (111). A negative phase shift between the primary-side ports (105, 106) and the secondary-side port (111) results in a power flow to the second primary-side port (106) and/or the first primary-side port (105).

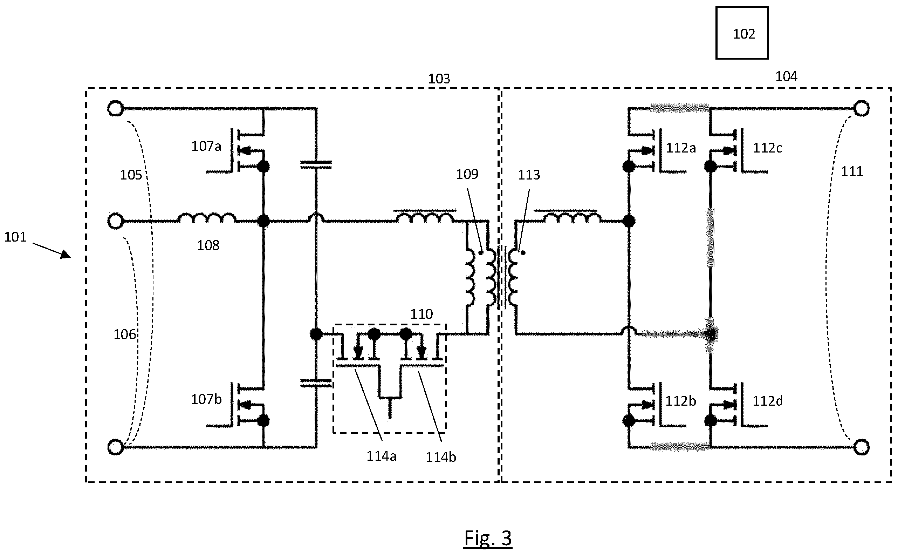

Fig. 3 schematically shows a three-port active bridge DC-DC power converter (101) according to the third embodiment of the first aspect of the invention. Compared to the first embodiment of the first aspect of the invention, which first embodiment is schematically shown in Fig. 1, the secondary side (104) comprises two additional secondary-side switching elements (112c, 112d). The four secondary-side switching elements (112a, 112b, 112c, 112d) are arranged to form a secondary-side full bridge.

An advantage of arranging two additional secondary-side switching elements (112c, 112d), wherein the four secondary-side switching elements (112a, 112b, 112c, 112d) form a secondary-side full bridge, is that reactive currents can be minimized using the phase shift between the four secondary-side switching elements (112a, 112b, 112c, 112d) and the primary-side switching elements (107a, 107b). A further advantage is that the full input voltage, i.e., the voltage supplied to the secondary side (104) through the transformer core, is available at the secondary-side port (111). In the case of a half bridge, half of the input voltage, i.e., half of the voltage supplied to the secondary side (104) through the transformer core, is available.

The power flows in the three-port isolated active bridge DC-DC power converter (101) are controlled by the control unit (102) controlling the switching of the primary-side switching elements (107a, 107b) and the secondary-side switching elements (112a, 112b, 112c, 112d). When power is converted from the first primary-side port (105) to the second primary-side port (106), the three-port isolated active bridge DC-DC power converter (101) acts as a buck converter between the first primary-side port (105) and the second primary-side port (106). Additionally, when power is converted between the primary side (103) and the secondary side (104), the three-port isolated active bridge DC-DC power converter (101) acts as an isolated DC-DC power converter between the primary side (103) and the secondary side (104). Specifically, the three-port isolated active bridge DC-DC power converter (101) is configured to allow bidirectional power flow to and from all its ports, in particular from and to the second primary-side port (106) and the secondary-side port (111). To achieve these bidirectional power flows, the control unit (101) is configured to control the primary-side switching elements (107a, 107b) and the secondary-side switching elements (112a, 112b, 112c, 112d) to generate a phase shift that determines the power transfer between the primary side (103) and the secondary side (104). In particular, a positive phase shift between the primary-side ports (105, 106) and the secondary-side port (111) results in a power flow to the secondary-side port (111). A negative phase shift between the primary-side ports (105, 106) and the secondary-side port (111) results in a power flow to the second primary-side port (106) and/or the first primary-side port (105).

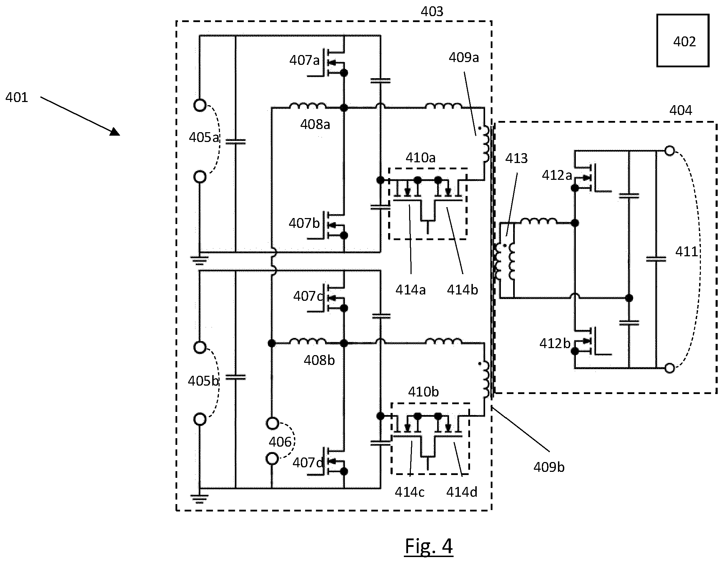

Fig. 4 schematically shows a multi-port isolated active bridge DC-DC power converter (401) according to a first embodiment of the third aspect of the invention. In the figure, the multi-port isolated active bridge DC-DC power converter (401) comprises a control unit (402), a primary side (403), and a secondary side (404).

The primary side (403) comprises two first primary-side ports (405a, 405b) and a second primary-side port (406). The primary side (403) further comprises four primary-side switching elements (407a, 407b, 407c, 407d) and two primary-side converter inductances (408a, 408b). Two primary-side switching elements (407a, 407b) and a first primary-side converter inductance (408a) are associated with a first first primary-side port (405a) to form a buck converter for converting power between the first first primary-side port (405a) and the second primary-side port (406). The other two primary-side switching elements (407c, 407d) and a second primary-side converter inductance (408b) are associated with a second first primary-side port (405b) to form a buck converter for converting power between the second first primary-side port (405b) and the second primary-side port (406). The control unit (402) is configured to control a first pair of primary-side switching elements (407a, 407b) to convert power between the first first primary-side port (405a) and the second primary-side port (406). The control unit (402) is further configured to control a second pair of primary-side switching elements (407c, 407d) to convert power between the first first primary-side port (405b) and the second primary-side port (406). The primary side (403) further comprises two primary-side transformer windings (409a, 409b), wherein a first primary-side transformer winding (409a) is associated with the first first primary-side port (405a) and a second primary-side transformer windings (409b) is associated with the second first primary-side port (405b).

The secondary side (404) comprises a secondary-side port (411), two secondary-side switching elements (412a, 412b), and a single secondary-side transformer winding (413), magnetically coupled to the primary-side transformer windings (409a, 409b), i.e., to each primary-side transformer winding (409a, 409b). The primary-side switching elements (407a, 407b, 407c, 407d), the primary-side transformer windings (409a, 409b), the two secondary-side switching elements (412a, 412b) and the secondary-side transformer winding (413) are arranged to form an isolated DC-DC converter between the primary-side ports (405a, 405b, 406) and the secondary-side port (411). The control unit is further configured to control the primary-side switching elements (407a, 407b, 407c, 407d) and the two secondary-side switching elements (412a, 412b) for converting power between the primary-side ports (405a, 405b, 406) and the secondary-side port (411).

The primary side (403) further comprises two blocking switches (410a, 410b), wherein a first blocking switch (410a) is associated with the first first primary-side port (405a) and a second blocking switch (410b) is associated with the second first primary-side port (405b). The control unit (402) is further configured to open the blocking switches (410a, 410b) to prevent power flow between the primary side (403) and the secondary side (404) and to close the blocking switches (410a, 410b) to allow power flow between the primary side (403) and the secondary side (404). Each blocking switch (410a, 410b) comprises two blocking switching elements (414a, 414b, 414c, 414d). Each pair of blocking switching elements (414a, 414b, 414c, 414d) is connected in anti-series. A first pair of blocking switching elements (414a, 414b) is connected in series to the first primary-side transformer winding (409a). A second pair of blocking switching elements (414c, 414d) is connected in series to the second primary-side transformer winding (409b).

The blocking switching elements (414a, 414b, 414c, 414d) are arranged such that they interrupt the power flow between the primary side (403) and the secondary side (404) when opened. The blocking switching elements (414a, 414b, 414c, 414d) are arranged such that they allow a power flow between the primary side (403) and the secondary side (404) when closed.

When the blocking switching elements (414a, 414b, 414c, 414d) are closed, the multi-port isolated active bridge DC-DC power converter (401) is configured to enable a power flow from the first primary-side ports (405a, 405b) to the secondary-side port (411). Further, when the blocking switching elements (414a, 414b, 414c, 414d) are closed, the multi-port isolated active bridge DC-DC power converter (401) is configured to enable a power flow from the secondary-side port (411) to the second primary-side port (406). Further, when the blocking switching elements (414a, 414b, 414c, 414d) are closed, the multi-port isolated active bridge DC-DC power converter (401) is configured to enable a power flow from the second primary-side port (406) to the secondary-side port (411). Further, when the blocking switching elements (414a, 414b, 414c, 414d) are closed, the multi-port isolated active bridge DC-DC power converter (401) is configured to enable a power flow from the second primary-side port (406) and the first primary-side ports (405a, 405b) to the secondary-side port (411). Further, when the blocking switching elements (414a, 414b, 414c, 414d) are closed, the multi-port isolated active bridge DC-DC power converter (401) is configured to enable a power flow from the secondary-side port (411) and the first primary-side port (405) to the second primary-side port (406). Further, when the blocking switching elements (414a, 414b, 414c, 414d) are closed, the multi-port isolated active bridge DC-DC power converter (401) is configured to enable a power flow from the first primary-side ports (405a, 405b) to the second primary-side port (406) and the secondary-side port (411). Further, the multi-port isolated active bridge DC-DC power converter (401) is configured to enable a power flow from the second primary-side port (406) and/or the secondary-side port (411) to the first primary-side ports (405a, 405b).

The power flows in the multi-port isolated active bridge DC-DC power converter (401) are controlled by the control unit (402) controlling the switching of the primary-side switching elements (407a, 407b, 407c, 407d) and the secondary-side switching elements (412a, 412b). When power is converted from the first primary-side ports (405a, 405b) to the second primary-side port (406), the multi-port isolated active bridge DC-DC power converter (401) acts as a buck converter between the first primary-side ports (405a, 405b) and the second primary-side port (406). Additionally, when power is converted between the primary side (403) and the secondary side (404), the multi-port isolated active bridge DC-DC power converter (401) acts as an isolated DC-DC power converter between the primary side (403) and the secondary side (404). Specifically, the multi-port isolated active bridge DC-DC power converter (401) is configured to allow bidirectional power flow to and from all its ports, in particular from and to the second primary-side port (406) and the secondary-side port (411). To achieve these bidirectional power flows, the control unit (402) is configured to control the primary-side switching elements (407a, 407b, 407c, 407d) and the secondary-side switching elements (412a, 412b) to generate a phase shift that determines the power transfer between the primary side (403) and the secondary side (404). In particular, a positive phase shift between the primary-side ports (405a, 405b, 406) and the secondary-side port (411) results in a power flow to the secondary-side port (411). A negative phase shift between the primary-side ports (405a, 405b, 406) secondary-side port (411) results in a power flow to the second primary-side port (406) and/or the first primary-side ports (405a, 405b).

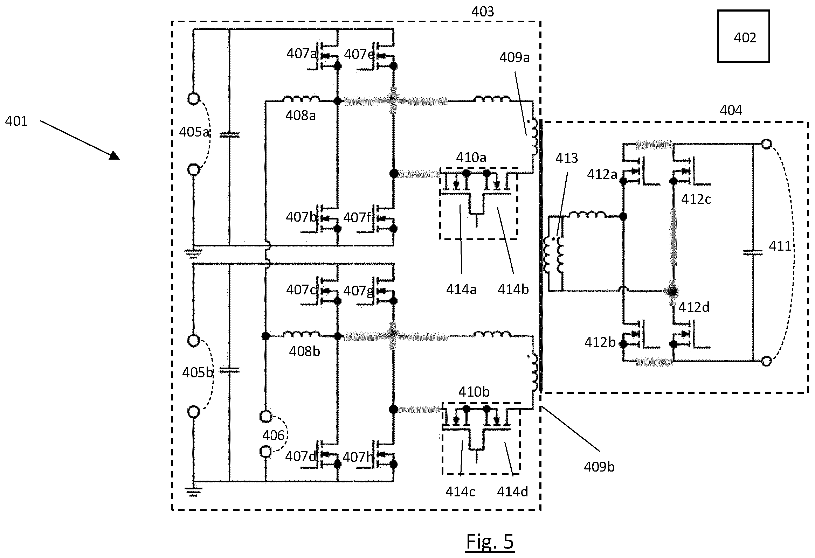

Fig. 5 schematically shows a multi-port isolated active bridge DC-DC power converter according to a second embodiment of the third aspect of the invention.

Compared to the first embodiment of the third aspect of the invention, which first embodiment is schematically shown in Fig. 4, the primary side (403) comprises four additional primary-side switching elements (407e, 407f, 407g, 407h). A first quadruple of primary-side switching elements (407a, 407b, 407e, 407f) are arranged to form a first primary-side full bridge, associated with the first first primary-side port (405a). A second quadruple of primary-side switching elements (407c, 407d, 407g, 407h) are arranged to form a second primary-side full bridge, associated with the second first primary-side port (405b). Additionally, the secondary side (404) comprises two additional secondary-side switching elements (412c, 412d). The four secondary-side switching elements (412a, 412b, 412c, 412d) are arranged to form a secondary-side full bridge.

An advantage of forming a primary-side full bridge and a secondary-side full bridge, is that reactive currents can be minimized using the phase shift between the eight primary-side switching elements (407a, 407b, 407c, 407d, 407e, 407f, 407g, 407h) and the secondary-side switching elements (412a, 412b, 412c, 412d). A further advantage is that the full input voltage, i.e., the voltage supplied through the first first primary-side port (405a) and the second first primary-side port (405b) is available at the first primary-side winding (409a) and the second primary-side winding (409b), respectively. In the case of a half bridge, half of the input voltage, i.e., half of the voltage supplied through the first primary-side ports (405a, 405b) is available. A further advantage is that the full voltage supplied to the secondary side (404) through the transformer core, is available at the secondary-side port (411). In the case of a half bridge, half of the voltage supplied to the secondary side (404) through the transformer core is available.

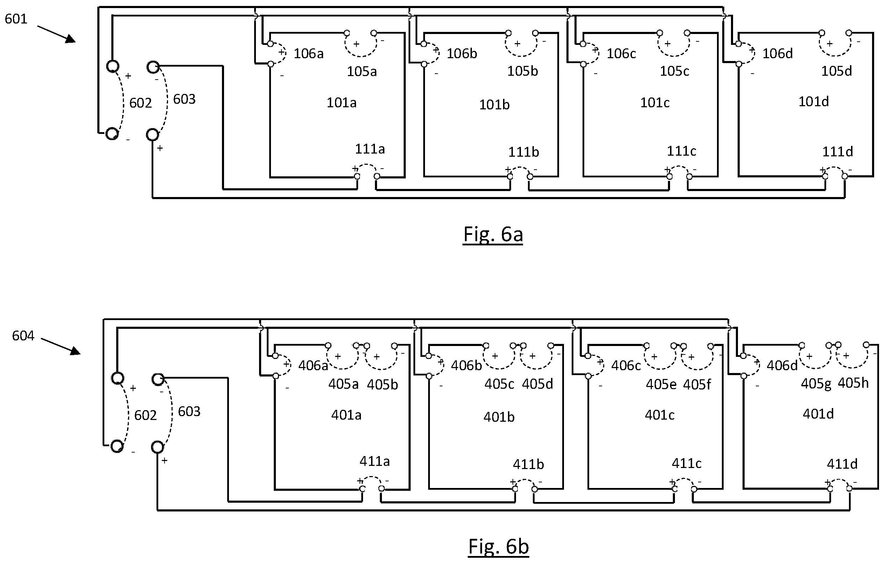

Fig. 6a schematically shows a three-port isolated active bridge DC-DC power converter system (601) according to an embodiment of the second aspect of the invention. In the figure, the three-port isolated active bridge DC-DC power converter system (601) comprises four three-port isolated active bridge DC-DC power converters (101a, 101b, 101c, 101d) according to the first aspect of the invention, a first system port (602), and a second system port (603);
The four three-port isolated active bridge DC-DC power converters (101a, 101b, 101c, 101d) are coupled in series through their secondary-side ports (111a, 111b, 111c, 111d) to form the second system port (603). Additionally, the four three-port isolated active bridge DC-DC power converters (101a, 101b, 101c, 101d) are coupled in parallel through their second primary-side ports (106a, 106b, 106c, 106d) to form the first system port (602).

The three-port isolated active bridge DC-DC power converter system (601) is configured for four power generating units to be connected to its four first primary-side ports (105a, 105b, 105c, 105d). Further, the three-port isolated active bridge DC-DC power converter system (601) comprises a single first system port (602) and a single second system port (603). The first system port (602) is arranged to be connected to a low voltage bus of a vehicle. The second system port (603) is arranged to be connected to a high voltage bus of a vehicle.

Fig. 6b schematically shows a multi-port isolated active bridge DC-DC power converter system (604) according to an embodiment of the fourth aspect of the invention. In the figure, the multi-port isolated active bridge DC-DC power converter system (604) comprises four three-port isolated active bridge DC-DC power converters (401a, 401b, 401c, 401d) according to the third aspect of the invention, a first system port (602), and a second system port (603);
The four multi-port isolated active bridge DC-DC power converters (401a, 401b, 401c, 401d) are coupled in series through their secondary-side ports (411a, 411b, 411c, 411d) to form the second system port (603). Additionally, the four multi-port isolated active bridge DC-DC power converters (401a, 401b, 401c, 401d) are coupled in parallel through their second primary-side ports (406a, 406b, 406c, 406d) to form the first system port (602).

The multi-port isolated active bridge DC-DC power converter system (604) is configured for eight power generating units to be connected to its eight first primary-side ports (405a-405h). Further, the multi-port isolated active bridge DC-DC power converter system (604) comprises a single first system port (602) and a single second system port (603). The first system port (602) is arranged to be connected to a low voltage bus of a vehicle. The second system port (603) is arranged to be connected to a high voltage bus of a vehicle.

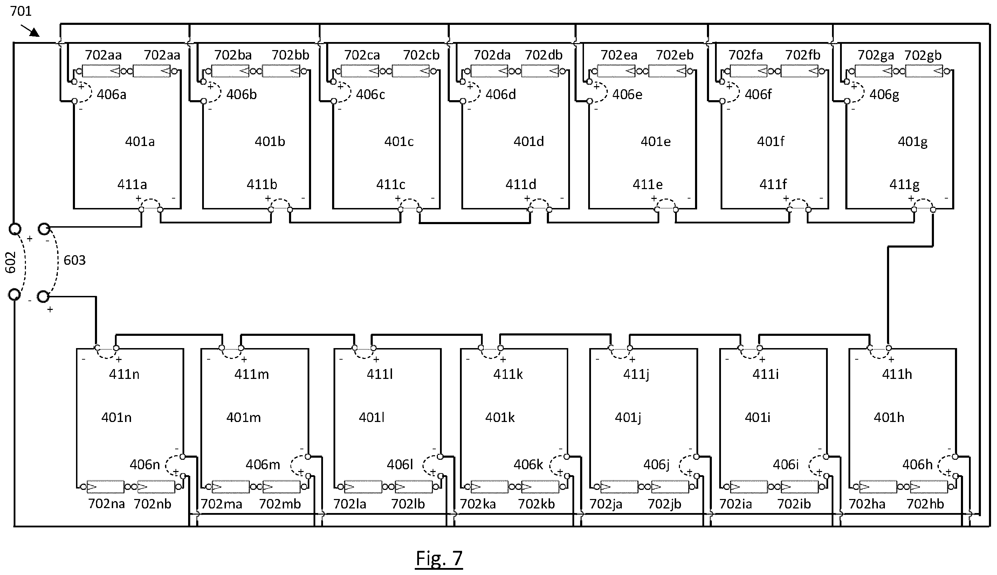

Fig. 7 schematically shows a solar power assembly (701) according to an embodiment of the fifth aspect of the invention. In the figure, the solar power assembly (701) comprises 28 solar power generating units (702aa-702nb) and a multi-port isolated active bridge DC-DC power converter system (604) according to the fourth aspect of the invention. The 14 multi-port isolated active bridge DC-DC power converters (401a-401n) comprised by the multi-port isolated active bridge DC-DC power converter system (604) are each connected to two solar power generating units (702aa-702nb).

One of the multi-port isolated active bridge DC-DC power converters (401a-401n) comprised by the multi-port isolated active bridge DC-DC power converter system (604) is designated as a master power converter. The control unit of the master power converter is configured to control the output current of the master power converter based on an output current setpoint. For example, the first multi-port isolated active bridge DC-DC power converter (401a) is designated as the master power converter. The remaining multi-port isolated active bridge DC-DC power converters (401b-401n) are designated as slave power converters. The control unit of each of the slave power converters (401b-401n) is configured to control the output voltage of its respective slave power converter (401b-401n) to match the output voltage of the master power converter (401a). Alternatively, the control unit of each of the slave power converters is configured to control the output voltage of its respective slave power converter to be the inverse of the product of the number of multi-port isolated active bridge DC-DC power converters (401a-401n) of the multi-port isolated active bridge DC-DC power converter system (604) and the output voltage of the first system port (602).

The multi-port isolated active bridge DC-DC power converter system (604) comprised by the solar power assembly comprises a single first system port (602) and a single second system port (603). The first system port (602) is arranged to be connected to a low voltage bus of a vehicle. The second system port (603) is arranged to be connected to a high voltage bus of a vehicle.

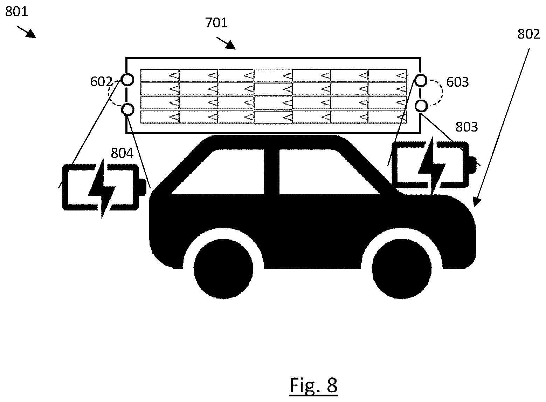

Fig. 8 schematically shows a vehicle (801) according to an embodiment of the sixth aspect of the invention. In the figure, the vehicle (801) comprises a body (802), a solar power assembly (701) according to the fifth aspect of the invention, a low voltage battery (803), and a high voltage battery (804).

The solar power generating units (702aa-702nb) of the solar power assembly are mechanically attached to the body (802). The low voltage battery (803) is connected to the first system port (602) of the power converter system (601) of the solar power assembly (701) and the high voltage battery (804) is connected to the second system port (603) of the multi-port isolated active bridge DC-DC power converter system (604) of the solar power assembly (701).

The vehicle comprises a low voltage battery (803), which is connected to a low voltage bus, wherein the low voltage bus powers the low voltage electrical components of the vehicle (801). The vehicle further comprises a high voltage battery (804), which is connected to a high voltage bus, wherein the high voltage bus powers the high voltage electrical components of the vehicle (801). The low voltage battery (803) is electrically connected, through the low voltage bus, to the first system port (602) of the multi-port isolated active bridge DC-DC power converter system (604). This allows power to flow from and to the low voltage battery (803). The high voltage battery (804) is electrically connected, through the high voltage bus, to the second system port (603) of the multi-port isolated active bridge DC-DC power converter system (604). This allows power to flow from and to the high voltage battery (804).

By mechanically attaching the solar power generating units (702aa-702nb) of the solar power assembly (701) to the body (802) of the vehicle (801), the solar power generating units (702aa-702nb) generate power when they are exposed to the sun. The power generated by the solar power generating units (702aa-702nb) flows through a respective first primary-side port (405a-405h) with which each one of the solar power generating units (702aa-702nb) are electrically connected to the multi-port isolated active bridge DC-DC power converter system (604). The multi-port isolated active bridge DC-DC power converter system (604) is configured to convert the power generated by the solar power generating units (702aa-702nb) such that it can be used by the vehicle (801), in particular by its low voltage battery (803) and high voltage battery (804).

The vehicle (801) is for example a commercially available vehicle, for example a vehicle for use on public roads.

## Claims

1. A three-port isolated active bridge DC-DC power converter system (601), comprising:
• a plurality of three-port isolated active bridge DC-DC power converters (101a-101n), each comprising:
• a control unit (102);
• a primary side (103), comprising:
∘ a single first primary-side port (105);
∘ a single second primary-side port (106);
∘ two primary-side switching elements (107a, 107b);
∘ a primary-side converter inductance (108);
∘ the two primary-side switching elements (107a, 107b) and the primary-side converter inductance (108) being arranged to form a half-bridge arrangement for bidirectionally converting power between the first primary-side port (105) and the second primary-side port (106);
o a primary-side transformer winding (109);
wherein:
∘ the control unit (102) is configured to control the two primary-side switching elements (107a, 107b) to convert power between the first primary-side port (105) and the second primary-side port (106);
• a secondary side (104), comprising:
∘ a single secondary-side port (111);
∘ two secondary-side switching elements (112a, 112b);
∘ a secondary-side transformer winding (113), magnetically coupled to the primary-side transformer winding (109);
∘ the two primary-side switching elements (107a, 107b), the primary-side transformer winding (109), the two secondary-side switching elements (112a, 112b) and the secondary-side transformer winding (113) being arranged to form an isolated DC-DC converter between the primary side (103) and the secondary side (104);
• a blocking switch (110);
wherein:
• the control unit (102) is configured to open the blocking switch (110) to prevent power flow between the primary side (103) and the secondary side (104) and to close the blocking switch (110) to allow power flow between the primary side (103) and the secondary side (104); and
• the control unit (102) is configured to control the two primary-side switching elements (107a, 107b) and the two secondary-side switching elements (112a, 112b) for converting power between the primary-side ports (105, 106) and the secondary-side port (111);
• a first system port (602);
• a second system port (603);
wherein:
• the plurality of three-port isolated active bridge DC-DC power converters (101a-101n) are coupled in parallel through their second primary-side ports (106a-106n) to form the first system port (602);
• the plurality of three-port isolated active bridge DC-DC power converters (101a-101n) are coupled in series through their secondary-side ports (111a-111n) to form the second system port (603);
• one of the three-port isolated active bridge DC-DC power converters (101a-101n) is designated as a master power converter, wherein the control unit (102) of the master power converter is configured to control the output current of the master power converter based on an output current setpoint, wherein the output current of the master converter is the output current flowing to the secondary-side port of the master power converter;
• the remaining three-port isolated active bridge DC-DC power converters (101a-101n) are designated as slave power converters, wherein the control unit (102) of each of the slave power converters is configured to control the output voltage of its respective slave power converter to match the output voltage of the master power converter, wherein the output voltage of each slave power converter is the output voltage of the secondary-side port of the respective slave power converter and the output voltage of the master power converter is the output voltage of the secondary-side port of the master power converter, or wherein the control unit (102) of each of the slave power converters is configured to control the output voltage of its respective slave power converter to be the inverse of the product of the number of three-port isolated active bridge DC-DC power converters (101a-101n) of the three-port isolated active bridge DC-DC power converter system (601) and the output voltage of the second system port.

2. The three-port isolated active bridge DC-DC power converter system (601) according to claim 1, wherein:
• each three-port isolated active bridge DC-DC power converter (101a-101n) is configured to enable a power flow from a first power port to a second power port, wherein:
∘ the first power port is one of the first primary-side port (105a-105n), the second primary-side port (106a-106n), and the secondary-side port (111a-111n);
∘ the second power port is one of the first primary side-port (105a-105n), the second primary-side port (106a-106n), and the secondary-side port (111a-111n);
∘ the first power port and the second power port are different; and/or
• each three-port isolated active bridge DC-DC power converter (101a-101n) is configured to enable a power flow from a first power port and a second power port to a third power port, wherein:
∘ the first power port is one of the first primary-side port (105a-105n), the second primary-side port (106a-106n), and the secondary-side port (111a-111n);
∘ the second power port is one of the first primary side-port (105a-105n), the second primary-side port (106a-106n), and the secondary-side port (111a-111n);
∘ the third power port is one of the first primary side-port (105a-105n), the second primary-side port (106a-106n), and the secondary-side port (111a-111n);
∘ the first power port and the second power port and the third power port are different; and/or
• each three-port isolated active bridge DC-DC power converter (101a-101n) is configured to enable a power flow from a first power port to a second power port and a third power port, wherein:
∘ the first power port is one of the first primary-side port (105a-105n), the second primary-side port (106a-106n), and the secondary-side port (111a-111n);
∘ the second power port is one of the first primary side-port (105a-105n), the second primary-side port (106a-106n), and the secondary-side port (111a-111n);
∘ the third power port is one of the first primary side-port (105a-105n), the second primary-side port (106a-106n), and the secondary-side port (111a-111n);
∘ the first power port and the second power port and the third power port are different.

3. The three-port isolated active bridge DC-DC power converter system (601) according to claim 1 or claim 2, wherein:
• the first system port (602) is a low voltage port, being arranged to be connected to a low voltage power storage;
• the second system port (603) is a high voltage port, being arranged to be connected to a high voltage power storage.

4. A multi-port isolated active bridge DC-DC power converter system (604), comprising:
• a plurality of multi-port isolated active bridge DC-DC power converters (401a-401n), each comprising:
• a control unit (402);
• a primary side (403), comprising:
∘ a plurality of first primary-side ports (405a, 405b);
∘ a second primary-side port (406);
∘ two primary-side switching elements (407a, 407b, 407c, 407d) for each first primary-side port (405a, 405b);
∘ a primary-side converter inductance (408a, 408b) for each first primary-side port (405a, 405b);
∘ each pair of primary-side switching elements (407a, 407b, 407c, 407d) and a respective primary-side converter inductance (408a, 408b) being arranged to form a half-bridge arrangement for bidirectionally converting power between a respective first primary-side port (405a, 405b) and the second primary-side port (406);
∘ a primary-side transformer winding (409a, 409b) for each first primary-side port (405a, 405b);
wherein the control unit (402) is configured to control each pair of primary-side switching elements (407a, 407b, 407c, 407d) to convert power between a respective first primary-side port (405a, 405b) and the second primary-side port (406);
• a secondary side (404), comprising:
∘ a secondary-side port (411);
∘ two secondary-side switching elements (412a, 412b);
∘ a single secondary-side transformer winding (413), magnetically coupled to each primary-side transformer winding (409a, 409b);
∘ the primary-side switching elements (407a, 407b, 407c, 407d), the primary-side transformer windings (109a, 109b), the two secondary-side switching elements (412a, 412b) and the secondary-side transformer winding (413) being arranged to form an isolated DC-DC converter between the primary side (403) and the secondary side (404);
wherein the control unit is configured to control the primary-side switching elements (407a, 407b, 407c, 407d) and the two secondary-side switching elements (412a, 412b) for converting power between the primary-side ports (405a, 405b, 406) and the secondary-side port (411);
• a first system port (602);
• a second system port (603);
wherein:
• the plurality of multi-port isolated active bridge DC-DC power converters (401a-401n) are coupled in parallel through their second primary side ports (406a-406n) to form the first system port (602);
• the plurality of multi-port isolated active bridge DC-DC power converters (401a-401n) are coupled in series through their secondary-side ports (411a-411n) to form the second system port (603)
• one of the multi-port isolated active bridge DC-DC power converters (401a-401n) is designated as a master power converter, wherein the control unit (402) of the master power converter is configured to control the output current of the master power converter based on an output current setpoint, wherein the output current of the master converter is the output current flowing to the secondary-side port of the master power converter;
• the remaining multi-port isolated active bridge DC-DC power converters (401a-401n) are designated as slave power converters, wherein the control unit (402) of each of the slave power converters is configured to control the output voltage of its respective slave power converter to match the output voltage of the master power converter, wherein the output voltage of each slave power converter is the output voltage of the secondary-side port of the respective slave power converter and the output voltage of the master power converter is the output voltage of the secondary-side port of the master power converter, or wherein the control unit (402) of each of the slave power converters is configured to control the output voltage of its respective slave power converter to be the inverse of the product of the number of multi-port isolated active bridge DC-DC power converters (401a-401n) of the multi-port isolated active bridge DC-DC power converter system (604) and the output voltage of the second system port.

5. The multi-port isolated active bridge DC-DC power converter system (604) according to claim 4, wherein:
• each multi-port isolated active bridge DC-DC power converter (401a-401d) is configured to enable a power flow from a first power port to a second power port, wherein:
∘ the first power port is one of the second primary-side port (406a-406d) and the secondary-side port (411a-411d);
∘ the second power port is one of the second primary-side port (406a-406d) and the secondary-side port (411a-411d);
∘ the first power port and the second power port are different; and/or
• each multi-port isolated active bridge DC-DC power converter (401a-401d) is configured to enable a power flow from each of the first primary-side power ports (405a-405h) to a first power port, wherein:
∘ the first power port is one of the second primary-side port (406a-406d) and the secondary-side port (411a-411d); and/or
• each multi-port isolated active bridge DC-DC power converter (401a-401d) is configured to enable a power flow from each of the first primary-side power ports (405a-405h) and a first power port to a second power port, wherein:
∘ the first power port is one of the second primary-side port (406a-406d) and the secondary-side port (411a-411d);
∘ the second power port is one of the second primary-side port (406a-406d) and the secondary-side port (411a-411d);
∘ the first power port and the second power port are different; and/or
• each multi-port isolated active bridge DC-DC power converter (401a-401d) is configured to enable a power flow from a first power port to each of the first primary-side power ports (405a-405h), wherein:
∘ the first power port is one of the second primary-side port (406a-406d) and the secondary-side port (411a-411d); and/or
• each multi-port isolated active bridge DC-DC power converter (401a-401d) is configured to enable a power flow from a first power port to each of the first primary-side power ports (405a-405h) and a second power port, wherein:
∘ the first power port is one of the second primary-side port (406a-406d) and the secondary-side port (411a-411d);
∘ the second power port is one of the second primary-side port (406a-406d) and the secondary-side port (411a-411d);
∘ the first power port and the second power port are different.

6. The multi-port isolated active bridge DC-DC power converter system (604) according to any one of claims 4-5, wherein:
• the first system port (602) is a low voltage port, being arranged to be connected to a low voltage power storage;
• the second system port (603) is a high voltage port, being arranged to be connected to a high voltage power storage.

7. The multi-port isolated active bridge DC-DC power converter system (604) according to any one of claims 4-6, wherein:
• each multi-port isolated active bridge DC-DC power converter (401a-401d) further comprises a blocking switch (410a, 410b) for each first primary-side port (405a-405d);
• the control unit (402) of each multi-port isolated active bridge DC-DC power converter (401a-401d) is configured to open the blocking switches (410a, 410b) to prevent power flow between the primary side (403) and the secondary side (404) and to close the blocking switches (410a, 410b) to allow power flow between the primary side (403) and the secondary side (404);
wherein, for each of each multi-port isolated active bridge DC-DC power converter (401a-401d):
• the primary side (403) comprises the blocking switches (410a, 410b);
• each blocking switch (410a, 410b) is connected in series to a respective primary-side transformer winding (409a, 409b).

8. The multi-port isolated active bridge DC-DC power converter system (604) according to any one of claims 4-6, wherein, for each of each multi-port isolated active bridge DC-DC power converter (401a-401d):
• the secondary side (403) further comprises a blocking switch (410a, 410b);
• the control unit (402) is configured to open the blocking switch (410a, 410b) to prevent power flow between the primary side (403) and the secondary side (404) and to close the blocking switch (410a, 410b) to allow power flow between the primary side (403) and the secondary side (404),
• the blocking switch (410a, 410b) is connected in series to the secondary-side transformer winding (413);
• each blocking switch (410a, 410b) comprises two blocking switching elements (414a, 414b, 414c, 414d), each pair of blocking switching elements (414a, 414b, 414c, 414d) being connected in anti-series.

9. A solar power assembly (701), comprising:
• a plurality of solar power generating units (702aa-702nb);
• a power converter system, being either a three-port isolated active bridge DC-DC power converter system (601) according to any one of claims 1-3 or a multi-port isolated active bridge DC-DC power converter system (604) according to any one of claims 4-8;
wherein:
• each solar power generating unit (702aa-702nb) of the plurality of solar power generating units (702aa-702nb) is connected to a single first primary-side port (105a-d, 405a-h) of the power converter system.

10. A vehicle (801), comprising:
• a body (802);
• a solar power assembly (701) according to claim 9;
• a low voltage battery (803);
• a high voltage battery (804);
wherein:
• the plurality of solar power generating units (702aa-702nb) of the solar power assembly (701) are mechanically attached to the body (802);
• the low voltage battery (803) is connected to the first system port (602) of the power converter system (601) of the solar power assembly (701) and the high voltage battery (804) is connected to the second system port (603) of the power converter system of the solar power assembly (701).

## Patentansprüche

1. System (601) aus DC-DC-Leistungswandlern mit isolierter aktiver Brücke und drei Anschlüssen, umfassend:
• mehrere DC-DC-Leistungswandler (101a-101n) mit isolierter aktiver Brücke und drei Anschlüssen, die jeweils umfassen:
• eine Steuereinheit (102);
• eine Primärseite (103), umfassend:
∘ einen einzelnen ersten primärseitigen Anschluss (105);
∘ einen einzelnen zweiten primärseitigen Anschluss (106);
∘ zwei primärseitige Schaltelemente (107a, 107b);
∘ eine primärseitige Wandlerinduktivität (108);
∘ wobei die zwei primärseitigen Schaltelemente (107a, 107b) und die primärseitige Wandlerinduktivität (108) so angeordnet sind, dass sie eine Halbbrückenanordnung zum bidirektionalen Wandeln von Leistung zwischen dem ersten primärseitigen Anschluss (105) und dem zweiten primärseitigen Anschluss (106) bilden;
∘ eine primärseitige Transformatorwicklung (109);
wobei:
∘ die Steuereinheit (102) dazu ausgelegt ist, die zwei primärseitigen Schaltelemente (107a, 107b) zu steuern, um Leistung zwischen dem ersten primärseitigen Anschluss (105) und dem zweiten primärseitigen Anschluss (106) zu wandeln;
• eine Sekundärseite (104), umfassend:
∘ einen einzelnen sekundärseitigen Anschluss (111);
∘ zwei sekundärseitige Schaltelemente (112a, 112b);
∘ eine sekundärseitige Transformatorwicklung (113), die magnetisch mit der primärseitigen Transformatorwicklung (109) gekoppelt ist;
∘ wobei die zwei primärseitigen Schaltelemente (107a, 107b), die primärseitige Transformatorwicklung (109), die zwei sekundärseitigen Schaltelemente (112a, 112b) und die sekundärseitige Transformatorwicklung (113) angeordnet sind, um einen isolierten DC-DC-Wandler zwischen der Primärseite (103) und der Sekundärseite (104) zu bilden;
• einen Sperrschalter (110);
wobei:
• die Steuereinheit (102) dazu ausgelegt ist, den Sperrschalter (110) zu öffnen, um einen Leistungsfluss zwischen der Primärseite (103) und der Sekundärseite (104) zu verhindern, und den Sperrschalter (110) zu schließen, um einen Leistungsfluss zwischen der Primärseite (103) und der Sekundärseite (104) zuzulassen; und
• die Steuereinheit (102) dazu ausgelegt ist, die zwei primärseitigen Schaltelemente (107a, 107b) und die zwei sekundärseitigen Schaltelemente (112a, 112b) zum Wandeln von Leistung zwischen den primärseitigen Anschlüssen (105, 106) und dem sekundärseitigen Anschluss (111) zu steuern;
• einen ersten Systemanschluss (602);
• einen zweiten Systemanschluss (603);
wobei:
• die mehreren DC-DC-Leistungswandler mit isolierter aktiver Brücke und drei Anschlüssen (101a-101n) durch ihre zweiten primärseitigen Anschlüsse (106a-106n) parallel geschaltet sind, um den ersten Systemanschluss (602) zu bilden;
• die mehreren DC-DC-Leistungswandler mit isolierter aktiver Brücke und drei Anschlüssen (101a-101n) durch ihre sekundärseitigen Anschlüsse (111a-111n) in Reihe geschaltet sind, um den zweiten Systemanschluss (603) zu bilden;
• einer der DC-DC-Leistungswandler mit isolierter aktiver Brücke und drei Anschlüssen (101a-101n) als ein Master-Leistungswandler bezeichnet wird, wobei die Steuereinheit (102) des Master-Leistungswandlers dazu ausgelegt ist, den Ausgangsstrom des Master-Leistungswandlers basierend auf einem Ausgangsstromsollwert zu steuern, wobei der Ausgangsstrom des Master-Wandlers der Ausgangsstrom ist, der zu dem sekundärseitigen Anschluss des Master-Leistungswandlers fließt;
• die verbleibenden DC-DC-Leistungswandler mit isolierter aktiver Brücke und drei Anschlüssen (101a-101n) als Slave-Leistungswandler bezeichnet werden, wobei die Steuereinheit (102) jedes der Slave-Leistungswandler dazu ausgelegt ist, die Ausgangsspannung ihres jeweiligen Slave-Leistungswandlers so zu steuern, dass sie mit der Ausgangsspannung des Master-Leistungswandlers übereinstimmt, wobei die Ausgangsspannung jedes Slave-Leistungswandlers die Ausgangsspannung des sekundärseitigen Anschlusses des jeweiligen Slave-Leistungswandlers ist und die Ausgangsspannung des Master-Leistungswandlers die Ausgangsspannung des sekundärseitigen Anschlusses des Master-Leistungswandlers ist, oder wobei die Steuereinheit (102) jedes der Slave-Leistungswandler dazu ausgelegt ist, die Ausgangsspannung ihres jeweiligen Slave-Leistungswandlers so zu steuern, dass sie das Inverse des Produkts aus der Anzahl an DC-DC-Leistungswandlern mit isolierter aktiver Brücke und drei Anschlüssen (101a-101n) des Systems aus DC-DC-Leistungswandlern mit isolierter aktiver Brücke und drei Anschlüssen (601) und der Ausgangsspannung des zweiten Systemanschlusses ist.

2. System (601) aus DC-DC-Leistungswandlern mit isolierter aktiver Brücke und drei Anschlüssen nach Anspruch 1, wobei:
• jeder DC-DC-Leistungswandler mit isolierter aktiver Brücke und drei Anschlüssen (101a-101n) dazu ausgelegt ist, einen Leistungsfluss von einem ersten Leistungsanschluss zu einem zweiten Leistungsanschluss zu ermöglichen, wobei:
∘ der erste Leistungsanschluss entweder der erste primärseitige Anschluss (105a-105n), der zweite primärseitige Anschluss (106a-106n) oder der sekundärseitige Anschluss (111a-111n) ist;
∘ der zweite Leistungsanschluss entweder der erste primärseitige Anschluss (105a-105n), der zweite primärseitige Anschluss (106a-106n) oder der sekundärseitige Anschluss (111a-111n) ist;
∘ der erste Leistungsanschluss und der zweite Leistungsanschluss unterschiedlich sind; und/oder
• jeder DC-DC-Leistungswandler mit isolierter aktiver Brücke und drei Anschlüssen (101a-101n) dazu ausgelegt ist, einen Leistungsfluss von einem ersten Leistungsanschluss und einem zweiten Leistungsanschluss zu einem dritten Leistungsanschluss zu ermöglichen, wobei:
∘ der erste Leistungsanschluss entweder der erste primärseitige Anschluss (105a-105n), der zweite primärseitige Anschluss (106a-106n) oder der sekundärseitige Anschluss (111a-111n) ist;
∘ der zweite Leistungsanschluss entweder der erste primärseitige Anschluss (105a-105n), der zweite primärseitige Anschluss (106a-106n) oder der sekundärseitige Anschluss (111a-111n) ist;
∘ der dritte Leistungsanschluss entweder der erste primärseitige Anschluss (105a-105n), der zweite primärseitige Anschluss (106a-106n) oder der sekundärseitige Anschluss (111a-111n) ist;
∘ der erste Leistungsanschluss und der zweite Leistungsanschluss und der dritte Leistungsanschluss unterschiedlich sind; und/oder
• jeder DC-DC-Leistungswandler mit isolierter aktiver Brücke und drei Anschlüssen (101a-101n) dazu ausgelegt ist, einen Leistungsfluss von einem ersten Leistungsanschluss zu einem zweiten Leistungsanschluss und einem dritten Leistungsanschluss zu ermöglichen, wobei:
∘ der erste Leistungsanschluss entweder der erste primärseitige Anschluss (105a-105n), der zweite primärseitige Anschluss (106a-106n) oder der sekundärseitige Anschluss (111a-111n) ist;
∘ der zweite Leistungsanschluss entweder der erste primärseitige Anschluss (105a-105n), der zweite primärseitige Anschluss (106a-106n) oder der sekundärseitige Anschluss (111a-111n) ist;
∘ der dritte Leistungsanschluss entweder der erste primärseitige Anschluss (105a-105n), der zweite primärseitige Anschluss (106a-106n) oder der sekundärseitige Anschluss (111a-111n) ist;
∘ der erste Leistungsanschluss und der zweite Leistungsanschluss und der dritte Leistungsanschluss unterschiedlich sind.

3. System (601) aus DC-DC-Leistungswandlern mit isolierter aktiver Brücke und drei Anschlüssen nach Anspruch 1 oder Anspruch 2, wobei:
• der erste Systemanschluss (602) ein Niederspannungsanschluss ist, der dazu ausgelegt ist, mit einer Niederspannungsleistungsspeicher verbunden zu werden;
• der zweite Systemanschluss (603) ein Hochspannungsanschluss ist, der dazu ausgelegt ist, mit einem Hochspannungsleistungsspeicher verbunden zu werden.

4. System (604) aus DC-DC-Leistungswandlern mit isolierter aktiver Brücke und mehreren Anschlüssen, umfassend:
• mehrere DC-DC-Leistungswandler (401a-401n) mit isolierter aktiver Brücke und mehreren Anschlüssen, die jeweils umfassen:
• eine Steuereinheit (402);
• eine Primärseite (403), umfassend:
∘ mehrere erste primärseitige Anschlüsse (405a, 405b);
∘ einen zweiten primärseitigen Anschluss (406);
∘ zwei primärseitige Schaltelemente (407a, 407b, 407c, 407d) für jeden ersten primärseitigen Anschluss (405a, 405b);
∘ eine primärseitige Wandlerinduktivität (408a, 408b) für jeden ersten primärseitigen Anschluss (405a, 405b);
∘ wobei jedes Paar primärseitiger Schaltelemente (407a, 407b, 407c, 407d) und eine jeweilige primärseitige Wandlerinduktivität (408a, 408b) angeordnet sind, um eine Halbbrückenanordnung zum bidirektionalen Wandeln von Leistung zwischen einem jeweiligen ersten primärseitigen Anschluss (405a, 405b) und dem zweiten primärseitigen Anschluss (406) zu bilden;
∘ eine primärseitige Transformatorwicklung (409a, 409b) für jeden ersten primärseitigen Anschluss (405a, 405b);
wobei die Steuereinheit (402) dazu ausgelegt ist, jedes Paar primärseitiger Schaltelemente (407a, 407b, 407c, 407d) zu steuern, um Leistung zwischen einem jeweiligen ersten primärseitigen Anschluss (405a, 405b) und dem zweiten primärseitigen Anschluss (406) zu wandeln;
• eine Sekundärseite (404), umfassend:
∘ einen sekundärseitigen Anschluss (411);
∘ zwei sekundärseitige Schaltelemente (412a, 412b);
∘ eine einzelne sekundärseitige Transformatorwicklung (413), die magnetisch mit jeder primärseitigen Transformatorwicklung (409a, 409b) gekoppelt ist;
∘ wobei die primärseitigen Schaltelemente (407a, 407b, 407c, 407d), die primärseitigen Transformatorwicklungen (109a, 109b), die zwei sekundärseitigen Schaltelemente (412a, 412b) und die sekundärseitige Transformatorwicklung (413) angeordnet sind, um einen isolierten DC-DC-Wandler zwischen der Primärseite (403) und der Sekundärseite (404) zu bilden;
wobei die Steuereinheit dazu ausgelegt ist, die primärseitigen Schaltelemente (407a, 407b, 407c, 407d) und die zwei sekundärseitigen Schaltelemente (412a, 412b) zum Wandeln von Leistung zwischen den primärseitigen Anschlüssen (405a, 405b, 406) und dem sekundärseitigen Anschluss (411) zu steuern;
• einen ersten Systemanschluss (602);
• einen zweiten Systemanschluss (603);
wobei:
• die mehreren DC-DC-Leistungswandler mit isolierter aktiver Brücke und mehreren Anschlüssen (401a-401n) durch ihre zweiten primärseitigen Anschlüsse (406a-406n) parallel geschaltet sind, um den ersten Systemanschluss (602) zu bilden;
• die mehreren DC-DC-Leistungswandler mit isolierter aktiver Brücke und mehreren Anschlüssen (401a-401n) durch ihre sekundärseitigen Anschlüsse (411a-411n) in Reihe geschaltet sind, um den zweiten Systemanschluss (603) zu bilden;
• einer der DC-DC-Leistungswandler mit isolierter aktiver Brücke und mehreren Anschlüssen (401a-401n) als ein Master-Leistungswandler bezeichnet wird, wobei die Steuereinheit (402) des Master-Leistungswandlers dazu ausgelegt ist, den Ausgangsstrom des Master-Leistungswandlers basierend auf einem Ausgangsstromsollwert zu steuern, wobei der Ausgangsstrom des Master-Wandlers der Ausgangsstrom ist, der zu dem sekundärseitigen Anschluss des Master-Leistungswandlers fließt;
• die verbleibenden DC-DC-Leistungswandler mit isolierter aktiver Brücke und mehreren Anschlüssen (401a-401n) als Slave-Leistungswandler bezeichnet werden, wobei die Steuereinheit (402) jedes der Slave-Leistungswandler dazu ausgelegt ist, die Ausgangsspannung ihres jeweiligen Slave-Leistungswandlers so zu steuern, dass sie mit der Ausgangsspannung des Master-Leistungswandlers übereinstimmt, wobei die Ausgangsspannung jedes Slave-Leistungswandlers die Ausgangsspannung des sekundärseitigen Anschlusses des jeweiligen Slave-Leistungswandlers ist und die Ausgangsspannung des Master-Leistungswandlers die Ausgangsspannung des sekundärseitigen Anschlusses des Master-Leistungswandlers ist, oder wobei die Steuereinheit (402) jedes der Slave-Leistungswandler dazu ausgelegt ist, die Ausgangsspannung ihres jeweiligen Slave-Leistungswandlers so zu steuern, dass sie das Inverse des Produkts aus der Anzahl an DC-DC-Leistungswandlern mit isolierter aktiver Brücke und mehreren Anschlüssen (401a-401n) des Systems aus DC-DC-Leistungswandlern mit isolierter aktiver Brücke und mehreren Anschlüssen (604) und der Ausgangsspannung des zweiten Systemanschlusses ist.

5. System (604) aus DC-DC-Leistungswandlern mit isolierter aktiver Brücke und mehreren Anschlüssen nach Anspruch 4, wobei:
• jeder DC-DC-Leistungswandler mit isolierter aktiver Brücke und mehreren Anschlüssen (401a-401d) dazu ausgelegt ist, einen Leistungsfluss von einem ersten Leistungsanschluss zu einem zweiten Leistungsanschluss zu ermöglichen, wobei:
∘ der erste Leistungsanschluss entweder der zweite primärseitige Anschluss (406a-406d) oder der sekundärseitige Anschluss (411a-411d) ist;
∘ der zweite Leistungsanschluss entweder der zweite primärseitige Anschluss (406a-406d) oder der sekundärseitige Anschluss (411a-411d) ist;
∘ der erste Leistungsanschluss und der zweite Leistungsanschluss unterschiedlich sind; und/oder
• jeder DC-DC-Leistungswandler mit isolierter aktiver Brücke und mehreren Anschlüssen (401a-401d) dazu ausgelegt ist, einen Leistungsfluss von jedem der ersten primärseitigen Leistungsanschlüsse (405a-405h) zu einem ersten Leistungsanschluss zu ermöglichen, wobei:
∘ der erste Leistungsanschluss entweder der zweite primärseitige Anschluss (406a-406d) oder der sekundärseitige Anschluss (411a-411d) ist; und/oder
• jeder DC-DC-Leistungswandler mit isolierter aktiver Brücke und mehreren Anschlüssen (401a-401d) dazu ausgelegt ist, einen Leistungsfluss von jedem der ersten primärseitigen Leistungsanschlüsse (405a-405h) und einem ersten Leistungsanschluss zu einem zweiten Leistungsanschluss zu ermöglichen, wobei:
∘ der erste Leistungsanschluss entweder der zweite primärseitige Anschluss (406a-406d) oder der sekundärseitige Anschluss (411a-411d) ist;
∘ der zweite Leistungsanschluss entweder der zweite primärseitige Anschluss (406a-406d) oder der sekundärseitige Anschluss (411a-411d) ist;
∘ der erste Leistungsanschluss und der zweite Leistungsanschluss unterschiedlich sind; und/oder
• jeder DC-DC-Leistungswandler mit isolierter aktiver Brücke und mehreren Anschlüssen (401a-401d) dazu ausgelegt ist, einen Leistungsfluss von einem ersten Leistungsanschluss zu jedem der ersten primärseitigen Leistungsanschlüsse (405a-405h) zu ermöglichen, wobei:
∘ der erste Leistungsanschluss entweder der zweite primärseitige Anschluss (406a-406d) oder der sekundärseitige Anschluss (411a-411d) ist; und/oder
• jeder DC-DC-Leistungswandler mit isolierter aktiver Brücke und mehreren Anschlüssen (401a-401d) dazu ausgelegt ist, einen Leistungsfluss von einem ersten Leistungsanschluss zu jedem der ersten primärseitigen Leistungsanschlüsse (405a-405h) und einem zweiten Leistungsanschluss zu ermöglichen, wobei:
∘ der erste Leistungsanschluss entweder der zweite primärseitige Anschluss (406a-406d) oder der sekundärseitige Anschluss (411a-411d) ist;
∘ der zweite Leistungsanschluss entweder der zweite primärseitige Anschluss (406a-406d) oder der sekundärseitige Anschluss (411a-411d) ist;
∘ der erste Leistungsanschluss und der zweite Leistungsanschluss unterschiedlich sind.

6. System (604) aus DC-DC-Leistungswandlern mit isolierter aktiver Brücke und mehreren Anschlüssen nach einem der Ansprüche 4-5, wobei:
• der erste Systemanschluss (602) ein Niederspannungsanschluss ist, der dazu ausgelegt ist, mit einer Niederspannungsleistungsspeicher verbunden zu werden;
• der zweite Systemanschluss (603) ein Hochspannungsanschluss ist, der dazu ausgelegt ist, mit einem Hochspannungsleistungsspeicher verbunden zu werden.

7. System (604) aus DC-DC-Leistungswandlern mit isolierter aktiver Brücke und mehreren Anschlüssen nach einem der Ansprüche 4-6, wobei:
• Jeder DC-DC-Leistungswandler mit isolierter aktiver Brücke und mehreren Anschlüssen (401a-401d) ferner einen Sperrschalter (410a, 410b) für jeden ersten primärseitigen Anschluss (405a-405d) umfasst;
• die Steuereinheit (402) jedes DC-DC-Leistungswandlers mit isolierter aktiver Brücke und mehreren Anschlüssen (401a-401d) dazu ausgelegt ist, die Sperrschalter (410a, 410b) zu öffnen, um einen Leistungsfluss zwischen der Primärseite (403) und der Sekundärseite (404) zu verhindern, und die Sperrschalter (410a, 410b) zu schließen, um einen Leistungsfluss zwischen der Primärseite (403) und der Sekundärseite (404) zuzulassen;
wobei für jeden DC-DC-Leistungswandler mit isolierter aktiver Brücke und mehreren Anschlüssen (401a-401d):
• die Primärseite (403) die Sperrschalter (410a, 410b) umfasst;
• jeder Sperrschalter (410a, 410b) mit einer jeweiligen primärseitigen Transformatorwicklung (409a, 409b) in Reihe geschaltet ist.

8. System (604) aus DC-DC-Leistungswandlern mit isolierter aktiver Brücke und mehreren Anschlüssen nach einem der Ansprüche 4-6, wobei für jeden DC-DC-Leistungswandler mit isolierter aktiver Brücke und mehreren Anschlüssen (401a-401d):
• die Sekundärseite (403) ferner einen Sperrschalter (410a, 410b) umfasst;
• die Steuereinheit (402) dazu ausgelegt ist, den Sperrschalter (410a, 410b) zu öffnen, um einen Leistungsfluss zwischen der Primärseite (403) und der Sekundärseite (404) zu verhindern, und den Sperrschalter (410a, 410b) zu schließen, um einen Leistungsfluss zwischen der Primärseite (403) und der Sekundärseite (404) zuzulassen;
• der Sperrschalter (410a, 410b) mit der sekundärseitigen Transformatorwicklung (413) in Reihe geschaltet ist;
• jeder Sperrschalter (410a, 410b) zwei Sperrschaltelemente (414a, 414b, 414c, 414d) umfasst, wobei jedes Paar aus Sperrschaltelementen (414a, 414b, 414c, 414d) in Gegenreihenschaltung geschaltet ist.

9. Solarleistungsanordnung (701), umfassend:
• mehrere Solarleistungserzeugungseinheiten (702aa-702nb);
• ein Leistungswandlersystem, das entweder ein System (601) aus DC-DC-Leistungswandlern mit isolierter aktiver Brücke und drei Anschlüssen nach einem der Ansprüche 1-3 oder ein System (604) aus DC-DC-Leistungswandlern mit isolierter aktiver Brücke und mehreren Anschlüssen nach einem der Ansprüche 4-8 ist;
wobei:
• jede Solarleistungserzeugungseinheit (702aa-702nb) der mehreren Solarleistungserzeugungseinheiten (702aa-702nb) mit einem einzelnen ersten primärseitigen Anschluss (105a-d, 405a-h) des Leistungswandlersystems verbunden ist.

10. Fahrzeug (801), umfassend:
• eine Karosserie (802);
• eine Solarleistungsanordnung (701) nach Anspruch 9;
• eine Niederspannungsbatterie (803);
• eine Hochspannungsbatterie (804);
wobei:
• die mehreren Solarleistungserzeugungseinheiten (702aa-702nb) der Solarleistungsanordnung (701) mechanisch an der Karosserie (802) angebracht sind;
• die Niederspannungsbatterie (803) mit dem ersten Systemanschluss (602) des Leistungswandlersystems (601) der Solarleistungsanordnung (701) verbunden ist und die Hochspannungsbatterie (804) mit dem zweiten Systemanschluss (603) des Leistungswandlersystems der Solarleistungsanordnung (701) verbunden ist.

## Revendications

1. Système de convertisseurs de puissance CC-CC isolés à pont actif et à trois ports (601), comprenant :
• une pluralité de convertisseurs de puissance CC-CC isolés à pont actif et à trois ports (101a-101n), chacun comprenant :
• une unité de commande (102) ;
• un côté primaire (103), comprenant :
∘ un seul premier port de côté primaire (105) ;
∘ un seul second port de côté primaire (106) ;
∘ deux éléments de commutation de côté primaire (107a, 107b) ;
∘ une inductance de convertisseur de côté primaire (108) ;
∘ les deux éléments de commutation de côté primaire (107a, 107b) et l'inductance de convertisseur de côté primaire (108) étant agencés pour former un agencement de demi-pont pour convertir de façon bidirectionnelle une puissance entre le premier port de côté primaire (105) et le second port de côté primaire (106) ;
∘ un enroulement de transformateur de côté primaire (109) ;
dans lequel :
∘ l'unité de commande (102) est configurée pour commander les deux éléments de commutation de côté primaire (107a, 107b) pour convertir une puissance entre le premier port de côté primaire (105) et le second port de côté primaire (106) ;
• un côté secondaire (104), comprenant :
∘ un seul port de côté secondaire (111) ;
∘ deux éléments de commutation de côté secondaire (112a, 112b) ;
∘ un enroulement de transformateur de côté secondaire (113), couplé magnétiquement à l'enroulement de transformateur de côté primaire (109) ;
∘ les deux éléments de commutation de côté primaire (107a, 107b), l'enroulement de transformateur de côté primaire (109), les deux éléments de commutation de côté secondaire (112a, 112b), et l'enroulement de transformateur de côté secondaire (113) étant agencés pour former un convertisseur CC-CC isolé entre le côté primaire (103) et le côté secondaire (104) ;
• un commutateur de blocage (110) ;
dans lequel :
• l'unité de commande (102) est configurée pour ouvrir le commutateur de blocage (110) pour empêcher une circulation de puissance entre le côté primaire (103) et le côté secondaire (104) et pour fermer le commutateur de blocage (110) pour permettre une circulation de puissance entre le côté primaire (103) et le côté secondaire (104) ; et
• l'unité de commande (102) est configurée pour commander les deux éléments de commutation de côté primaire (107a, 107b) et les deux éléments de commutation de côté secondaire (112a, 112b) pour convertir une puissance entre les ports de côté primaires (105, 106) et le port de côté secondaire (111) ;
• un premier port de système (602) ;
• un second port de système (603) ;
dans lequel :
• la pluralité de convertisseurs de puissance CC-CC isolés à pont actif et à trois ports (101a-101n) sont couplés en parallèle par le biais de leurs seconds ports de côté primaire (106a-106n) pour former le premier port de système (602) ;
• la pluralité de convertisseurs de puissance CC-CC isolés à pont actif et à trois ports (101a-101n) sont couplés en série par le biais de leurs ports de côté secondaire (111a-111n) pour former le second port de système (603) ;
• un des convertisseurs de puissance CC-CC isolés à pont actif et à trois ports (101a-101n) est désigné en tant que convertisseur de puissance maître, dans lequel l'unité de commande (102) du convertisseur de puissance maître est configurée pour commander le courant de sortie du convertisseur de puissance maître sur la base d'un point de consigne de courant de sortie, dans lequel le courant de sortie du convertisseur maître est le courant de sortie circulant jusqu'au port de côté secondaire du convertisseur de puissance maître ;
• les autres convertisseurs de puissance CC-CC isolés à pont actif et à trois ports (101a-101n) sont désignés en tant que convertisseurs de puissance esclaves, dans lequel l'unité de commande (102) de chacun des convertisseurs de puissance esclaves est configurée pour commander la tension de sortie de son convertisseur de puissance esclave respectif pour qu'elle coïncide avec la tension de sortie du convertisseur de puissance maître, dans lequel la tension de sortie de chaque convertisseur de puissance esclave est la tension de sortie du port de côté secondaire du convertisseur de puissance esclave respectif et la tension de sortie du convertisseur de puissance maître est la tension de sortie du port de côté secondaire du convertisseur de puissance maître, ou dans lequel l'unité de commande (102) de chacun des convertisseurs de puissance esclaves est configurée pour commander la tension de sortie de son convertisseur de puissance esclave respectif pour être l'inverse du produit du nombre de convertisseurs de puissance CC-CC isolés à pont actif et à trois ports (101a-101n) du système de convertisseurs de puissance CC-CC isolés à pont actif et à trois ports (601) et de la tension de sortie du second port de système.

2. Système de convertisseurs de puissance CC-CC isolés à pont actif et à trois ports (601) selon la revendication 1, dans lequel :
• chaque convertisseur de puissance CC-CC isolé à pont actif et à trois ports (101a-101n) est configuré pour permettre une circulation de puissance depuis un premier port de puissance jusqu'à un deuxième port de puissance, dans lequel :
∘ le premier port de puissance est un du premier port de côté primaire (105a-105n), du second port de côté primaire (106a-106n), et du port de côté secondaire (111a-111n) ;
∘ le deuxième port de puissance est un du premier port de côté primaire (105a-105n), du second port de côté primaire (106a-106n), et du port de côté secondaire (111a-111n) ;
∘ le premier port de puissance et le deuxième port de puissance sont différents ; et/ou
• chaque convertisseur de puissance CC-CC isolé à pont actif et à trois ports (101a-101n) est configuré pour permettre une circulation de puissance depuis un premier port de puissance et un deuxième port de puissance jusqu'à un troisième port de puissance, dans lequel :
∘ le premier port de puissance est un du premier port de côté primaire (105a-105n), du second port de côté primaire (106a-106n), et du port de côté secondaire (111a-111n) ;
∘ le deuxième port de puissance est un du premier port de côté primaire (105a-105n), du second port de côté primaire (106a-106n), et du port de côté secondaire (111a-111n) ;
∘ le troisième port de puissance est un du premier port de côté primaire (105a-105n), du second port de côté primaire (106a-106n), et du port de côté secondaire (111a-111n) ;
∘ le premier port de puissance et le deuxième port de puissance et le troisième port de puissance sont différents ; et/ou
• chaque convertisseur de puissance CC-CC isolé à pont actif et à trois ports (101a-101n) est configuré pour permettre une circulation de puissance depuis un premier port de puissance jusqu'à un deuxième port de puissance et un troisième port de puissance, dans lequel :
∘ le premier port de puissance est un du premier port de côté primaire (105a-105n), du second port de côté primaire (106a-106n), et du port de côté secondaire (111a-111n) ;
∘ le deuxième port de puissance est un du premier port de côté primaire (105a-105n), du second port de côté primaire (106a-106n), et du port de côté secondaire (111a-111n) ;
∘ le troisième port de puissance est un du premier port de côté primaire (105a-105n), du second port de côté primaire (106a-106n), et du port de côté secondaire (111a-111n) ;
∘ le premier port de puissance et le deuxième port de puissance et le troisième port de puissance sont différents.

3. Système de convertisseurs de puissance CC-CC isolés à pont actif et à trois ports (601) selon la revendication 1 ou la revendication 2, dans lequel :
• le premier port de système (602) est un port à basse tension, agencé pour être connecté à un stockage de puissance à basse tension ;
• le second port de système (603) est un port à haute tension, agencé pour être connecté à un stockage de puissance à haute tension.

4. Système de convertisseurs de puissance CC-CC isolés à pont actif et à ports multiples (604), comprenant :
• une pluralité de convertisseurs de puissance CC-CC isolés à pont actif et à ports multiples (401a-401n), chacun comprenant :
• une unité de commande (402) ;
• un côté primaire (403), comprenant :
∘ une pluralité de premiers ports de côté primaire (405a, 405b) ;
∘ un second port de côté primaire (406) ;
∘ deux éléments de commutation de côté primaire (407a, 407b, 407c, 407d) pour chaque premier port de côté primaire (405a, 405b) ;
∘ une inductance de convertisseur de côté primaire (408a, 408b) pour chaque premier port de côté primaire (405a, 405b) ;
∘ chaque paire d'éléments de commutation de côté primaire (407a, 407b, 407c, 407d) et une inductance de convertisseur de côté primaire respective (408a, 408b) étant agencées pour former un agencement de demi-pont pour convertir de façon bidirectionnelle une puissance entre un premier port de côté primaire respectif (405a, 405b) et le second port de côté primaire (406) ;
∘ un enroulement de transformateur de côté primaire (409a, 409b) pour chaque premier port de côté primaire (405a, 405b) ;
dans lequel l'unité de commande (402) est configurée pour commander chaque paire d'éléments de commutation de côté primaire (407a, 407b, 407c, 407d) pour convertir une puissance entre un premier port de côté primaire respectif (405a, 405b) et le second port de côté primaire (406) ;
• un côté secondaire (404), comprenant :
∘ un port de côté secondaire (411) ;
∘ deux éléments de commutation de côté secondaire (412a, 412b) ;
∘ un seul enroulement de transformateur de côté secondaire (413), couplé magnétiquement à chaque enroulement de transformateur de côté primaire (409a, 409b) ;
∘ les éléments de commutation de côté primaire (407a, 407b, 407c, 407d), les enroulements de transformateur de côté primaires (109a, 109b), les deux éléments de commutation de côté secondaire (412a, 412b), et l'enroulement de transformateur de côté secondaire (413) étant agencés pour former un convertisseur CC-CC isolé entre le côté primaire (403) et le côté secondaire (404) ;
dans lequel l'unité de commande est configurée pour commander les éléments de commutation de côté primaire (407a, 407b, 407c, 407d) et les deux éléments de commutation de côté secondaire (412a, 412b) pour convertir une puissance entre les ports de côté primaires (405a, 405b, 406) et le port de côté secondaire (411) ;
• un premier port de système (602) ;
• un second port de système (603) ;
dans lequel :
• la pluralité de convertisseurs de puissance CC-CC isolés à pont actif et à ports multiples (401a-401n) sont couplés en parallèle par le biais de leurs seconds ports de côté primaire (406a-406n) pour former le premier port de système (602) ;
• la pluralité de convertisseurs de puissance CC-CC isolés à pont actif et à ports multiples (401a-401n) sont couplés en série par le biais de leurs ports de côté secondaire (411a-411n) pour former le second port de système (603);
• un des convertisseurs de puissance CC-CC isolés à pont actif et à ports multiples (401a-401n) est désigné en tant que convertisseur de puissance maître, dans lequel l'unité de commande (402) du convertisseur de puissance maître est configurée pour commander le courant de sortie du convertisseur de puissance maître sur la base d'un point de consigne de courant de sortie, dans lequel le courant de sortie du convertisseur maître est le courant de sortie circulant jusqu'au port de côté secondaire du convertisseur de puissance maître ;
• les autres convertisseurs de puissance CC-CC isolés à pont actif et à ports multiples (401a-401n) sont désignés en tant que convertisseurs de puissance esclaves, dans lequel l'unité de commande (402) de chacun des convertisseurs de puissance esclaves est configurée pour commander la tension de sortie de son convertisseur de puissance esclave respectif pour qu'elle coïncide avec la tension de sortie du convertisseur de puissance maître, dans lequel la tension de sortie de chaque convertisseur de puissance esclave est la tension de sortie du port de côté secondaire du convertisseur de puissance esclave respectif et la tension de sortie du convertisseur de puissance maître est la tension de sortie du port de côté secondaire du convertisseur de puissance maître, ou dans lequel l'unité de commande (402) de chacun des convertisseurs de puissance esclaves est configurée pour commander la tension de sortie de son convertisseur de puissance esclave respectif pour être l'inverse du produit du nombre de convertisseurs de puissance CC-CC isolés à pont actif et à ports multiples (401a-401n) du système de convertisseurs de puissance CC-CC isolés à pont actif et à ports multiples (604) et de la tension de sortie du second port de système.

5. Système de convertisseurs de puissance CC-CC isolés à pont actif et à ports multiples (604) selon la revendication 4, dans lequel :
• chaque convertisseur de puissance CC-CC isolé à pont actif et à ports multiples (401a-401d) est configuré pour permettre une circulation de puissance depuis un premier port de puissance jusqu'à un deuxième port de puissance, dans lequel :
∘ le premier port de puissance est un du second port de côté primaire (406a-406d) et du port de côté secondaire (411a-411d) ;
∘ le deuxième port de puissance est un du second port de côté primaire (406a-406d) et du port de côté secondaire (411a-411d) ;
∘ le premier port de puissance et le deuxième port de puissance sont différents ; et/ou
• chaque convertisseur de puissance CC-CC isolé à pont actif et à ports multiples (401a-401d) est configuré pour permettre une circulation de puissance depuis chacun des premiers ports de puissance de côté primaire (405a-405h) jusqu'à un premier port de puissance, dans lequel :
∘ le premier port de puissance est un du second port de côté primaire (406a-406d) et du port de côté secondaire (411a-411d) ; et/ou
• chaque convertisseur de puissance CC-CC isolé à pont actif et à ports multiples (401a-401d) est configuré pour permettre une circulation de puissance depuis chacun des premiers ports de puissance de côté primaire (405a-405h) et un premier port de puissance jusqu'à un deuxième port de puissance, dans lequel :
∘ le premier port de puissance est un du second port de côté primaire (406a-406d) et du port de côté secondaire (411a-411d) ;
∘ le deuxième port de puissance est un du second port de côté primaire (406a-406d) et du port de côté secondaire (411a-411d) ;
∘ le premier port de puissance et le deuxième port de puissance sont différents ; et/ou
• chaque convertisseur de puissance CC-CC isolé à pont actif et à ports multiples (401a-401d) est configuré pour permettre une circulation de puissance depuis un premier port de puissance jusqu'à chacun des premiers ports de puissance de côté primaire (405a-405h), dans lequel :
∘ le premier port de puissance est un du second port de côté primaire (406a-406d) et du port de côté secondaire (411a-411d) ; et/ou
• chaque convertisseur de puissance CC-CC isolé à pont actif et à ports multiples (401a-401d) est configuré pour permettre une circulation de puissance depuis un premier port de puissance jusqu'à chacun des premiers ports de puissance de côté primaire (405a-405h) et un deuxième port de puissance, dans lequel :
∘ le premier port de puissance est un du second port de côté primaire (406a-406d) et du port de côté secondaire (411a-411d) ;
∘ le deuxième port de puissance est un du second port de côté primaire (406a-406d) et du port de côté secondaire (411a-411d) ;
∘ le premier port de puissance et le deuxième port de puissance sont différents.

6. Système de convertisseurs de puissance CC-CC isolés à pont actif et à ports multiples (604) selon l'une quelconque des revendications 4 et 5, dans lequel :
• le premier port de système (602) est un port à basse tension, agencé pour être connecté à un stockage de puissance à basse tension ;
• le second port de système (603) est un port à haute tension, agencé pour être connecté à un stockage de puissance à haute tension.

7. Système de convertisseurs de puissance CC-CC isolés à pont actif et à ports multiples (604) selon l'une quelconque des revendications 4 à 6, dans lequel :
• chaque convertisseur de puissance CC-CC isolé à pont actif et à ports multiples (401a-401d) comprend en outre un commutateur de blocage (410a, 410b) pour chaque premier port de côté primaire (405a-405d) ;
• l'unité de commande (402) de chaque convertisseur de puissance CC-CC isolé à pont actif et à ports multiples (401a-401d) est configurée pour ouvrir les commutateurs de mise hors service (410a, 410b) pour empêcher une circulation de puissance entre le côté primaire (403) et le côté secondaire (404) et pour fermer les commutateurs de mise hors service (410a, 410b) pour permettre une circulation de puissance entre le côté primaire (403) et le côté secondaire (404) ;
dans lequel, pour chacun de chaque convertisseur de puissance CC-CC isolé à pont actif et à ports multiples (401a-401d) :
• le côté primaire (403) comprend les commutateurs de mise hors service (410a, 410b) ;
• chaque commutateur de blocage (410a, 410b) est connecté en série à un enroulement de transformateur de côté primaire respectif (409a, 409b).

8. Système de convertisseurs de puissance CC-CC isolés à pont actif et à ports multiples (604) selon l'une quelconque des revendications 4 à 6, dans lequel, pour chacun de chaque convertisseur de puissance CC-CC isolé à pont actif et à ports multiples (401a-401d) :
• le côté secondaire (403) comprend en outre un commutateur de blocage (410a, 410b) ;
• l'unité de commande (402) est configurée pour ouvrir le commutateur de blocage (410a, 410b) pour empêcher une circulation de puissance entre le côté primaire (403) et le côté secondaire (404) et pour fermer le commutateur de blocage (410a, 410b) pour permettre une circulation de puissance entre le côté primaire (403) et le côté secondaire (404),
• le commutateur de blocage (410a, 410b) est connecté en série à l'enroulement de transformateur de côté secondaire (413) ;
• chaque commutateur de blocage (410a, 410b) comprend deux éléments de commutation de blocage (414a, 414b, 414c, 414d), chaque paire d'éléments de commutation de blocage (414a, 414b, 414c, 414d) étant connectée en anti-série.

9. Ensemble d'énergie solaire (701), comprenant :
• une pluralité d'unités génératrices d'énergie solaire (702aa-702nb) ;
• un système de convertisseurs de puissance, étant soit un système de convertisseurs de puissance CC-CC isolés à pont actif et à trois ports (601) selon l'une quelconque des revendications 1 à 3 soit un système de convertisseurs de puissance CC-CC isolés à pont actif et à ports multiples (604) selon l'une quelconque des revendications 4 à 8 ;
dans lequel :
• chaque unité génératrice d'énergie solaire (702aa-702nb) de la pluralité d'unités génératrices d'énergie solaire (702aa-702nb) est connectée à un seul premier port de côté primaire (105a-d, 405a-h) du système de convertisseurs de puissance.

10. Véhicule (801), comprenant :
• une carrosserie (802) ;
• un ensemble d'énergie solaire (701) selon la revendication 9 ;
• une batterie à basse tension (803) ;
• une batterie à haute tension (804) ;
dans lequel :
• la pluralité d'unités génératrices d'énergie solaire (702aa-702nb) de l'ensemble d'énergie solaire (701) sont fixées mécaniquement à la carrosserie (802) ;
• la batterie à basse tension (803) est connectée au premier port de système (602) du système de convertisseurs de puissance (601) de l'ensemble d'énergie solaire (701) et la batterie à haute tension (804) est connectée au second port de système (603) du système de convertisseurs de puissance de l'ensemble d'énergie solaire (701).
